# EUROPEAN PATENT SPECIFICATION

(11) **EP 0 797 638 B1**
(45) Date of publication and mention of the grant of the patent: **04.06.2003**
(21) Application number: 95943816.9
(22) Date of filing: 14.12.1995
(51) Int. Cl.: C09D 11/16

(54) **ERASABLE INK COMPOSITION AND MARKING INSTRUMENT CONTAINING SAME**
LÖSCHBARE TINTE AND MARKIERSTIFT ENTHALTEND DIESE
ENCRE EFFA ABLE ET ARTICLES MARQUEURS LA CONTENANT

(30) Priority: 16.12.1994 US 357601; 24.08.1995 US 518671
(43) Date of publication of application: 01.10.1997
(73) Proprietor: BIC CORPORATION, Milford Connecticut 06460 (US)
(72) Inventor: BANNING, Jeffery, H., Hillsboro, OR 97124 (US); CHANDLER, Wayne, A., Fountain Inn, South Carolina 29644 (US); VILLIGER, David, C., Greenville, SC 29601 (US); WANG, Aiying, Simpsonville, SC 29681 (US); CHADWICK, Barry, W., Simpsonville, SC 29681 (US)
(74) Representative: Moreland, David, Dr.
(86) International application number: US9516342
(87) International publication number: WO96018697

(56) References cited:
- EP-A- 0 322 805
- DATABASE WPI Week 7923 Derwent Publications Ltd., London, GB; AN 7943152B XP002000786 & JP,A,54 053 034 (PENTEL) , 26 April 1979

## Description

### BACKGROUND OF THE INVENTION

This invention relates to an erasable ink composition and to a marking instrument, e.g., a ball-point pen, containing the composition. More particularly, this invention relates to an erasable ink composition containing a water-insoluble polymer dye component, i.e., a polymer possessing a dye moiety covalently bonded thereto.

Numerous erasable ink compositions are known, e.g., those described in U.S. Patent Nos. 3,834,823, 3,875,105, 3,949,132, 4,097,290, 4,212,676, 4,227,930, 4,256,494, 4,297,260, 4,329,262, 4,329,264, 4,349,639, 4,357,431, 4,367,966, 4,368,076, 4,379,867, 4,389,499, 4,390,646, 4,391,927, 4,407,985, 4,410,643, 4,419,464, 4,441,928, 4,509,982, 4,525,216, 4,557,618, 4,578,117, 4,596,846, 4,606,769, 4,629,748, 4,687,791, 4,721,739, 4,738,725, 4,760,104, 4,786,198, 4,830,670, 4,954,174, 4,960,464, 5, 004, 763, 5,024,898, 5,037,702, 5,082,495, 5,114,479, 5,120,359, 5, 160, 369 and 5,217,255. These inks are formulated by mixing a dye (taken herein to also include "pigment", "colorant", "chromophore" and other terms of similar meaning) with a variety of polymer and liquid carrier/solvent combinations thereby forming a flowable dye/polymer matrix. The polymer component is chosen for its film forming properties and its ability to be readily removed from the substrate to which it is applied, e.g., cellulosic paper, through the abrasive action of an eraser. However, a common problem with these erasable ink compositions concerns the residual dye which remains after erasure. Incomplete erasure may be attributed to inadequate removal of the dye/polymer matrix from the paper substrate and/or migration of dye into the pores of the substrate.

### SUMMARY OF THE INVENTION

In accordance with the present invention an erasable ink composition is provided which comprises (a) a water-insoluble polymer dye obtained by affecting polymerization of a polymer-forming reaction medium containing at least two coreactive polyfunctional monomers with at least one of the monomers possessing a dye moiety covalently bonded thereto and (b) an evaporable liquid carrier in which the polymer dye is dissolved, dispersed or swollen, the erasable ink composition when applied to a substrate and upon drying thereon being (1) sufficiently adherent to the substrate as to resist flaking therefrom and (2) substantially erasable.

Since the dye is covalently bonded to the polymer in the erasable ink composition of this invention, there is little opportunity for it to separate from the polymer and migrate into a porous substrate. Thus, the erasable ink composition of this invention is apt to leave significantly less residual dye following its erasure than known erasable ink compositions in which the dye is merely physically combined with the polymer component(s).

### DESCRIPTION OF THE PREFERRED EMBODIMENTS

The polymer dye component of the erasable ink composition of this invention is prepared by polymerizing at least two coreactive polyfunctional monomers with at least one of the monomers possessing a dye moiety covalently bonded thereto. At least one of the monomers must be sufficiently hydrophobic as to render the resulting polymer dye water-insoluble. Part or all of the polyfunctional monomers can be oligomeric or polymeric in native. The expression "polyfunctional monomer" characterizes those compounds possessing at least two reactive functional groups (not counting any sites of unsaturation that may be present) such as, but not limited to, hydroxyl, sulfhydryl, carboxylic acid, amine, nitrile, acyl halide and isocyanate groups. The expression also includes compounds which, under polymerization reaction conditions, present polyfunctionality, e.g., lactones and lactams which on opening of their rings are chemically equivalent to α,ω-hydroxy-carboxylic acids and α,ω-aminocarboxylic acids, respectively.

Polymeric dyes of the type that are useful in the erasable ink composition of this invention are known (but for applications other than erasable ink compositions) or can be prepared by appropriate modification of known polymer-forming procedures. Illustrative of such known polymeric dyes are those disclosed in U.S. Patent Nos. 4,778,742, 5,104,913, and 5,194,463.

A preferred polymer dye for use herein is one prepared by a waterborne process, i.e., a polymerization process in which the resulting polymer is provided as an aqueous emulsion or dispersion polymer dye particles. The polymer dye emulsion with or without the addition of other components can, if desired, be utilized directly as the erasable ink composition of this invention thus eliminating any further manufacturing operations (unlike the case of bulk polymer dyes which would require pulverization to the desired particle size followed by addition of some suitable evaporable liquid carrier).

In accordance with U.S. Patent No. 4,778,742, a polymeric dye of the general formula

[―O―A―DYE―A―O―B―]ₙ

wherein A is selected from the group consisting of alkylene and arylene, B is selected from the group consisting of 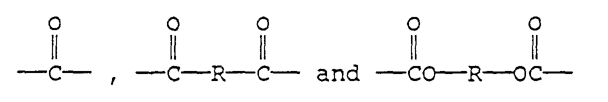 wherein R is an alkylene group, an arylene segment or a polyether segment, DYE is a dye moiety and n is from about 2 to about 100 and preferably from about 5 to about 35, can be prepared by a solution or interfacial polymerization process. In solution polymerization, stoichiometric amounts of polyfunctional monomers, specifically, a bisphenoxy-functionalized dye and a diacyl halide, are reacted in a suitable solvent medium, e.g., an aliphatic halogenated hydrocarbon such as methylene chloride, in the presence of an excess amount of a tertiary amine such as triethylamine base. Polymerization is then affected at a temperature of from about 5°C. to about 30°C. and completed in about 0.5 to 3 hours. In interfacial polymerization, a bisphenoxy-functionalized dye is initially dissolved in an aqueous alkaline solution in the presence of an emulsifying agent. Thereafter, the resulting solution is stirred and treated with a solution of an appropriate bifunctional monomer such as a diacyl chloride or a bishaloformate in a water immiscible solvent such as methylene chloride to obtain, respectively, the polyester dye or the polycarbonate dye. The polymeric dyes from the solution polymerization process are then further treated by washing the reaction mixture with water followed by precipitation of a methylene chloride solution of the dyes from a nonsolvent such as hexane or methanol. Also, with the interfacial process, the polymeric dyes are separated by simple filtration followed by washing thoroughly with water.

Examples of bisphenoxy-functionalized dye monomers that can be used to prepare the polymeric dyes of U.S. Patent No. 4,778,742 include 1,5-bis(p-hydroxyphenylthio) anthraquinone, 1,8-bis(p-hydroxyphenylythio)anthraquinone, 1,5-bis(p-hydroxyphenylthio)-4,8-bis(phenylthio) anthraquinone, 1,8-bis[2-(p-hydroxyphenyl)ethylamino] anthraquinone, 1,5-bis[2-(p-hydroxyphenyl)ethylamino] anthraquinone, 1,4-bis[2-(p-hydroxyphenylamino) anthraquinone, 1, 4-bis[2-(p-hydroxyphenyl)ethylamino] anthraquinone, 1, 4-bis[2-(p-hydroxyphenylthio) anthraquinone and 6-phenylthio-1, 4-bis[2-(p-hydroxyphenyl)ethylamino]anthraquinone.

Examples of diacyl halide monomers that can be reacted with the bisphenoxy-functionalized dye monomers to provide the polymeric dye of U.S. Patent No. 4,778,742 include succinyl chloride, glutaryl chloride, adipoyl chloride, dimethylglutaryl chloride, sebacoyl chloride, phthaloyl chloride, isophthaloyl chloride, terephthaloyl chloride. Examples of usefulbishaloformates include diethyleneglycol bischloroformate, triethyleneglycol bischloroformate, tetraethyleneglycol bischloroformate, biphenoxy bischloroformate, propyleneglycol bischloroformate, dipropyleneglycol bischloroformate, butyleneglycol bischloroformate, ethyleneglycol bisbromoformate, propyleneglycol bisbromoformate.

The polymeric dye of U.S. Patent No. 5, 104, 913 is obtained by polymerizing a polyfunctional monomer possessing a dye moiety covalently bonded thereto, a terephthalic and/or 2,6-naphthalenedicarboxylic acid and a branched-chain diol of the general formula 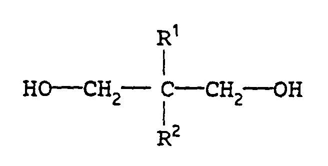 wherein R¹ is hydrogen or an unsubstituted or substituted alkyl, cycloalkyl or aryl radical and R² is an unsubstituted or substituted alkyl, cycloalkyl or aryl radical. The dye-containing monomer can be selected from anthraquinone, methine, bis-methine, anthrapyridone, 2,5-diarylaminoterephthalic acid or ester, coumarin, quinophthalone, perylene and other thermally-stable dye compounds possessing functional groups that are reactive for the carboxylic and/or hydroxyl groups of the other monomers, i.e., hydroxyl, carboxyl, ester, amino, alkylamino, groups, such that the dye will be incorporated in the resulting polyester. Examples of dye-containing monomers include anthraquinone dyes and methine dyes possessing two reactive functional groups selected from the aforementioned types.

U.S. Patent No. 5,194,463 describes a polymer dye which is a polyurethane of the general formula 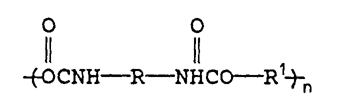 wherein R is a divalent radical selected from optionally substituted C₂-C₁₀-alkylene, C₃-C₈-cycloalkylene, arylene, C₁-C₄-alkylene-arylene-C₁-C₄-alkylene, C₁-C₄-alkylene-C₃-C₈-cycloalkylene-C₁-C₄-alkylene or C₁-C₄-alkylene-1, 2, 3, 4, 5, 6, 7-octahydronaphthalene-2,6-diyl-C₁-C₄-alkylene; R¹ is a divalent organic radical comprised of about 1 to 100 mole percent of the residue of a dye bonded to two hydroxyl groups through alkylene moieties with any remainder of R¹ comprised of the residue of organic diols of the formula HO―R²―OH in which R² is a divalent radical selected from C₂-C₁₈ alkylene, C₃-C₈-cycloalkylene, C₁-C₄ alkylene-1, 2, 3, 4, 5, 6, 7, 8-octahydronaphthalen-2, 6-diyl-C₁-C₄ alkylene, C₁-C₄-alkylene-C₃-C₈-cycloalkylene-C₁ -C₄-alkylene, C₁-C₄ alkylene-arylene-C₁-C₄-alkylene, C₂-C₄ alkylene-O-C₂-C₄ alkylene, C₂-C₄ alkylene-S-C₂-C₄ alkylene or C₂-C₄ alkylene-O-C₂-C₄ alkylene-O-C₂-C₄ alkylene; and n is equal to or greater than 2.

The dye containing the hydroxyl groups can be selected from a variety of chromophoric classes including azo, metallized azo, diazo, methine, or arylidene, polymethine, azo-methine, anthraquinone, azamethine, anthrapyridone (3H-dibenz [f,ij] isoquinoline-2,7-dione), anthrapyridine (7H-dibenz [f,ij] isoquinoline-7-one), phthaloylphenothiazine (14H-naphtho [2,3-a] phenothiazine-8,13-dione), benzanthrone (7H(de)anthracene-7-one), anthrapyrimidine (7H-benzo [e] perimidine-7-one), anthrapyrazole, anthraisothiazole, triphenodioxazine, thiaxanthene-9-one, fluorindine (5, 12-dihydroquinoxaline [2,3-b] phenazine), quinophthalone, phthalocyanine, naphthalocyanine, nickel dithiolenes, coumarin (2H-1-benzopyran-2-one), coumarin imine (2H-l-benzopyran-2-imine), indophenol, perinone, nitroarylamine, benzodifuran, phthaloylphenoxazine (14H-naphtho[2,3-alphenoxazine-8,13-dione), phthaloylacridone (13H-naphtho[2,3-c] acridine 5,8,14-trione), anthraquinonethioxanthone (8H-naphtho[2,3-c] thioxanthene-5,8,13-trione), anthrapyridazone, naphtho[1',2',3':4,5]quino[2,1-b] quinazoline-5,10-dione, 1H-anthra(2,1-b)(1,4) thiazin-7,12-dione, indigo, thioindigo, xanthene, acridine, azine, oxazine, 1,4- and 1,5-naphthoquinones, pyromellitic acid diimide, naphthalene-1,4,5,8-tetracarboxylic acid diimide, 3,4,9,10-perylenetetracarboxylic acid diimide, hydroxybenzophenone, benzotriazole, naphthotriazole, naphthoquinone, diminoisoindoline, naphthopyran (3H-naphtho[2,1-b] pyran-3-ones and 3-imines) and aminonaphthalimide.

The polyurethane of U.S. Patent No. 5,194,463 can be obtained by reacting one or more of the dihydroxyl-containing dyes with a diisocyanate and, if desired, another diol, employing known procedures.

Numerous modifications of the foregoing known processes for obtaining a polymeric dye that can be utilized in the erasable ink composition of this invention are possible. For example, part or all of the bisphenoxy-functionalized dye monomer of U.S. Patent No. 4,778,742, the functionalized dye monomer of U.S. Patent No. 5, 104, 913 or the hydroxyl-containing dye monomer of U.S. Patent No. 5,194,463 can be replaced with a polyfunctional polymer dye monomer of the general formula

(R)̵ₐ(̵P⁅X]_{b})_{c}

wherein R is a dye moiety covalently bonded to polymer residue P, X is a functional group, a, b and c each is at least 1, provided, the product of b x c is at least 2, when c is at least 2, a is 1 and where there is more than one R, P or X, each R, P or X can be the same or different. Dye moiety R can be derived from among any of the polyfunctionalized dye monomers previously mentioned, polymer residue P can be that of a polyether, polyester, polyamide, polycarbonate, and X can include hydroxyl, sulfhydryl, carboxyl, primary amine, secondary amine and isocyanate reactive groups. For example, a dihydroxyl-containing dye such as one described in U.S. Patent No. 5,194,463 or some other dihydroxyl-containing dye can be reacted with ethylene oxide, propylene oxide or a mixture thereof to provide a hydroxyl-terminated liquid polyether dye monomer. Polyether dyes of this type are known from U.S. Patent Nos. 3,157,633 and 4,284,729. Similarly, the dihydroxyl-containing dye can be reacted with an α, ω-hydroxycarboxylic acid or cyclic ester analog thereof, for example ε-caprolactone, to provide a hydroxyl-terminated liquid polyester dye monomer. Either the polyether or polyester dye monomer can be reacted with a polyisocyanate or an isocyanate-terminated prepolymer to provide the water-insoluble polymer dye component of the erasable ink composition herein.

The dye monomers utilized in the practice of this invention possess pendent dye moieties covalently bonded thereto. The dye moieties can be of any variety such as azo, tricyanovinyl, anthraquinone and methine. Azo dye moieties are generally preferred.

Dye monomers which are particularly useful in carrying out the present invention include amine dye monomers possessing structural units of the general formula: 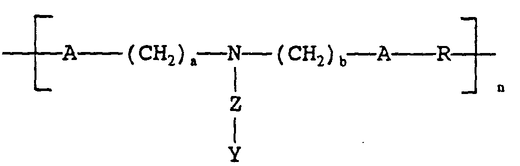 wherein each A independently can be an ester or amide linkage, n can be an integer of from 1 to 50, preferably from 1 to 5, R is an aliphatic (straight-chain, branched or cyclic) or aromatic (single or fused ring) hydrocarbon with up to 30 carbon atoms, a and b are independently from 1 to 10, Z is an arylene group such as phenylene, diphenylene or naphthylene, optionally containing one or more substituents such as halogen, hydroxyl, -CHO, alkoxy, alkylamino, dialkylamino, amide, alkylamide, -NH₂, -NO_{2,} phenyl, carbamyl, -CN, carbalkoxy, sulfonyl, sulfamyl and sulfamido or a single bond when Y is an anthraquinone group and Y is a dye moiety selected from (1) an azo group where Y can be -N=N-D or -N=N-G-N=N-D wherein D is an aromatic nucleus of 1 to 5 rings (fused or connected by single bonds) or a heterocyclic ring of 4, 5 or 6 members containing one to four or more atoms of -N-, -S- and nonperoxidic atoms -O- and optionally bearing one or more auxochromic groups such as -Cl, -Br, -F, - OH, alkyl, alkoxy, alkylamino, dialkylamino, -NH_{2,} -NO_{2,} phenyl, carbamyl, -CN, carbalkoxy, sulfonyl, sulfamyl and sulfamido and G is a phenylene or napthylene group; (2) a tricyanovinyl group where Y can be 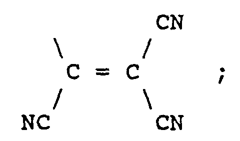 (3) an anthraquinone group where Y can be 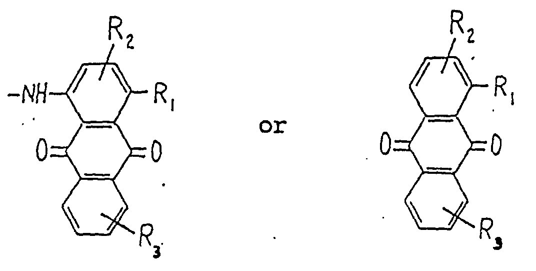 wherein R₁ can be -OH, -NH₂, alkylamine, dialkylamino or arylamino where aryl is phenyl or phenyl substituted by auxochromic groups as defined for use on D as defined in (1) above, R₂ and R₃ independently can be auxochromic groups as defined for use on D as defined in (1) above; and (4) a methine group where Y can be 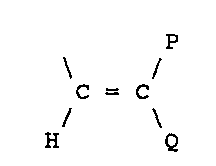 wherein P and Q are independently selected from cyano, carbalkoxy, carbaryloxy, carbaralkyloxy, carbamyl, carboxy, N-alkylcarbamyl, N-alkyl-N-arylcarbamyl, N,N-diakylcarbamyl, N-arylcarbamyl, N-cyclohexylcarbamyl, aryl, 2-benzoxazolyl, 2-benzothiazoyl, 2-benzimidazolyl, 1,3,4-thiadiazol-2-yl, 1,3,4-oxadiazol-2-yl, SO₂ alkyl, SO₂ aryl and acyl or P and Q may be combined as 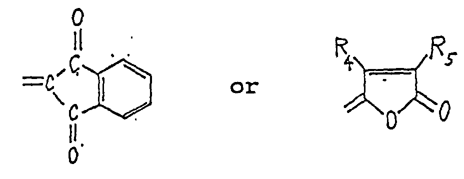 wherein R₄ is alkyl, aryl or cycloalkyl and R₅ is CN, COOH, CO₂ alkyl, carbamyl or N-alkylcarbamyl, wherein each alkyl, aryl or cycloalkyl moiety or portion of a group or radical may be substituted with one or more auxochromic groups as defined for use on D as defined in (1) above.

The amine dye monomer is advantageously produced by reacting an aromatic amine of the general formula: 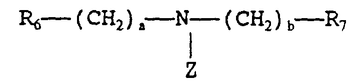 wherein R₆ and R₇ are independently COOH, COOR₈ wherein R₈ is an alkyl group of from 1 to 8 carbon atoms, NH₂ and OH, a and b independently range from 1 to 10 and Z is an aryl group such as phenyl, diphenyl, naphthyl, said aryl group optionally containing one or more substituents such as halogen, hydroxyl, -CHO, alkyl, alkoxy, alkylamino, dialkylamino, amide, alkylamide, -NH₂, -NO₂, phenyl, carbamyl, -CN, carbalkoxy, sulfonyl, sulfamyl and sulfamido with one or more reactants selected from the group consisting of polyhydric alcohol, polyamine and polycarboxylic acid under condensation polymerization reaction conditions to provide a polyester or polyamide containing polymerized units of the above-identified aromatic amine and groups that are reactive with isocyanate groups. Thereafter, a dye moiety is coupled to the polyester or polyamide through the pendant aromatic units derived from the aromatic amine employing any suitable technique such as diazotization. In an alternative embodiment, the dye moiety is coupled to the pendant aromatic units of the aromatic amine prior to forming the polyester or polyamide.

Suitable polyhydric alcohols include those of the general formula:

HO―R―OH

wherein R can be an aliphatic (straight-chain, branched or cyclic) or aromatic (single or fused ring) hydrocarbon with up to 30 carbon atoms, suitable polyamines include those of the general formula H₂N―R―NH₂ wherein R is the same as defined above for the polyhydric alcohol and suitable polycarboxylic acids include those of the general formula: 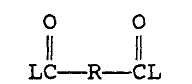 wherein R is the same as defined above for the polyhydric alcohol and L is halogen, hydroxyl or alkoxy. In a preferred embodiment, phenyldiethanolamine, i.e., 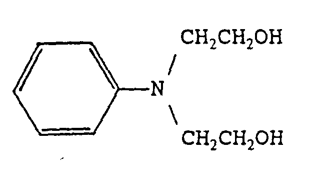 is employed as the aromatic amine, an alkanediol such as butanediol or hexanediol is employed as the polyhydric alcohol and adipic acid is employed as the polycarboxylic acid to provide a polyester polyol dye monomer in accordance with this disclosure. In another preferred embodiment, substituted phenyldiethanolamine is employed as the aromatic amine. Particularly preferred substituted phenyldiethanolamines are those corresponding to the following formulas: 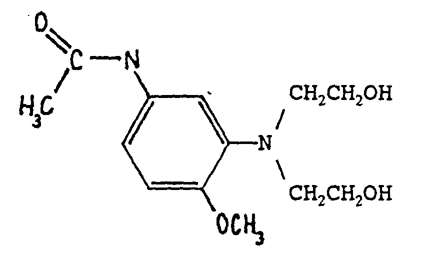 which is commercially available from Henkel Corp. (Emery 5752) and 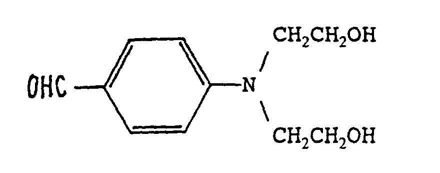 which can be obtained by, e.g., nucleophilic aromatic substitution or the Vilsmeier-Haack reaction. See, e.g., U.S. Patent No. 4,757,130. The former substituted phenyldiethanolamine is useful as an intermediate for blue colorants. It will be understood by those skilled in the art that a molar excess of polyhydric alcohol starting reactants can be employed to provide hydroxyl-terminated polyester dye monomer and that a molar excess of polyamine starting reactants can be employed to provide amine- terminated polyamide dye monomer.

The amine dye monomers are preferably linear and preferably contain from 1 to about 5 dye moieties per chain length of dye monomer, more preferably 1 or 2 dye moieties per chain length. Molecular weights ranging from about 500 up to about 5000, preferably from about 2500 to about 3500, g/mol have been found to be particularly useful in the practice of this invention. The amine dye monomer is reacted under waterborne polymer-forming reaction conditions as disclosed herein with an isocyanate-group containing monomer to provide waterborne polyurethane-urea. It will be understood by those skilled in the art that uncolored monomers, for example, uncolored polyester polyol, can be combined with the dye monomer and isocyanate-group containing monomer to provide the waterborne polyurethane-urea polymer dye disclosed herein. Any suitable uncolored monomer may be employed. Any suitable isocyanate-group containing monomer can likewise be employed. Typically, such a monomer will correspond to the general formula:

OCN―R―NCO

wherein R is the same as defined above in connection with the polyhydric alcohol. Representative examples of such isocyanate-group containing monomers are the isomers of aromatic diisocyanates such as toluene diisocyanate (TDI), xylene diisocyanate, 1,3-bis(1-isocyanato-1-methylethyl) benzene difunctional aliphatic or cycloaliphatic isocyanates having between 2 and 18 carbon atoms, preferably between 4 and 12 carbon atoms, such as isopherone diisocyanate and hexamethylene diisocyanate, and isomers and oligomers of di(4-isocyanatophenyl) methane (MDI).

A particularly preferred waterborne polymer dye for use herein is a waterborne polyurethane-urea prepared by modification of any of the polymerization processes described in Frisch et al., ed., "Advances in Urethane Science and Technology", Vol. 10, pp. 121-162 (1987). The modification referred to involves the substitution of part or all of one or more of the polyfunctional reactants employed in these processes with a polyfunctional monomer possessing covalently bonded dye in accordance with the present invention. Thus, e.g., amine dye monomer and isocyanate-group containing monomer are reacted under waterborne polymer-forming reaction conditions in a hydroxyl (or amine) to isocyanate equivalent ratio of about 0.25:1 to about 1:0.25, respectively. Where an excess of isocyanate is employed, the resulting polymer can be chain extended in accordance with well known procedures.

The waterborne polymer-forming reaction conditions which can be advantageously utilized to prepare waterborne polymer dyes in accordance with this invention, respectively, the solvent, melt dispersion, prepolymer mixing and ketamine/ketazine processes, can be summarized as follows:
1. The Solvent Process
   The solvent process involves the steps of:
   a) reacting a liquid polymeric diol with a diisocyanate to provide an isocyanate group-terminated prepolymer possessing or lacking sufficient hydrophilic groups to render the prepolymer self-dispersible;
   b) reacting the isocyanate group-terminated prepolymer dissolved in organic solvent with an aliphatic diamine chain extender and, where the prepolymer lacks sufficient hydrophilic groups to be self-dispersible, an aliphatic diamine chain extender possessing at least one hydrophilic group, to provide an organic solvent solution of self-dispersible polyurethane-urea; and,
   c) adding a sufficient amount of water to the organic solvent solution of the polyurethane-urea to form a dispersion of polyurethane-urea particles,
   at least one of said liquid polymeric diol, diisocyanate and aliphatic diamine possessing a dye moiety covalently bonded thereto.
2. The Melt Dispersion Process
   The melt dispersion process involves the steps of:
   a) reacting a liquid polymeric diol, an aliphatic diol possessing at least one ionic group and a diisocyanate to provide an isocyanate group terminated prepolymer possessing ionic groups;
   b) reacting the isocyanate group-terminated prepolymer with a formaldehyde-reactive capping agent to cap the isocyanate end groups;
   c) dispersing the capped prepolymer in water; and,
   d) reacting the dispersed capped prepolymer with formaldehyde to provide dispersed polyurethane-urea particles,
   at least one of said liquid polymeric diol, diisocyanate and aliphatic diol possessing a dye moiety covalently bonded thereto.
3. The Prepolymer Mixing Process
   The prepolymer mixing process involves the steps of:
   a) reacting a liquid polymeric diol, a carboxylic group-containing diol and an aliphatic diisocyanate to provide an isocyanate group-terminated prepolymer possessing free carboxyl groups;
   b) reacting the prepolymer with a tertiary amine to convert the carboxyl groups to ammonium carboxylate groups and render the prepolymer self-dispersible;
   c) dispersing the self-dispersible prepolymer in water; and,
   d) reacting the dispersed prepolymer with a diamine chain extender to provide an aqueous dispersion of polyurethane-urea particles,
   at least one of said liquid polymeric diol, carboxyl group-containing diol, aliphatic diisocyanate and aliphatic liquid diamine chain extender possessing colorant covalently bound thereto.
4. The Ketamine/Ketazine Process
   The ketamine/Ketazine process involves the steps of:
   a) reacting a liquid polymeric diol, a carboxylic group-containing diol and a diisocyanate to provide an isocyanate group-terminated prepolymer possessing free carboxyl groups;
   b) reacting the prepolymer with a tertiary amine to convert the carboxyl groups to ammonium carboxylate groups and render the prepolymer self-dispersible;
   c) reacting the self-dispersible prepolymer with at least one member of the group consisting of ketimine and ketazine in the presence of water to provide an aqueous dispersion of polyurethane-urea particles,
   at least one of said liquid polymeric diol, carboxyl group-containing diol, aliphatic diisocyanate and aliphatic liquid diamine chain extender possessing colorant covalently bound thereto.

In a preferred embodiment of these waterborne processes, the liquid polymeric diol is one of the general formula R(̵POH)₂ wherein R is a covalently bound dye chromophore and each P is the same or different polymer residue. Examples of such liquid polymeric diols include any of the previously mentioned dihydroxyl-terminated liquid polyether or polyester dye monomers containing a covalently bonded dye moiety such as the amine dye monomer.

The polymer dye component of the erasable ink composition of this invention will generally possess an average particle size of from about 25 to about 5000 nanometers and preferably from about 50 to about 2000 nanometers. Where the polymer dye component is not obtained in a particle size which is suitable for use in the erasable ink composition herein, it may be reduced to such size by any known or conventional method for obtaining polymer powders, for example, by grinding, milling, or by any of several "hot water" emulsification processes for producing polymer powders such as that described in U.S. Patent No. 3,586,654.

When employed, the waterborne polyurethane-urea component of the erasable ink composition of this invention will generally possess an average particle size of from 0.01 to 4 microns and preferably from 0.05 to 0.20 microns.

The fully formulated erasable ink composition, i.e., the polymeric dye component in admixture with the evaporable liquid carrier component and any optional component(s), can possess a relatively low viscosity, e.g., from about 2 to about 80,000 centipoises and preferably from about 3 to about 30,000 centipoises when water is the carrier, or a relatively high viscosity, e.g., at least about 100,000 centipoises and preferably at least about 500,000 centipoises when the carrier is an organic solvent or mixture of organic solvents which swell or dissolve the polymer dye. It will, of course, be recognized that when the erasable ink composition possesses such a high viscosity that it no longer readily flows solely under the influence of gravity, it becomes necessary to provide a pressurized delivery system for any marking instrument containing the ink.

To improve or optimize one or more functional characteristics of the erasable ink composition, one or more optional components can be added in the usual amounts to the composition, e.g., one or more natural and/or synthetic polymer latices, rheological modifiers, organic solvents, humectants, emulsifiers, surfactants, plasticizers, spreading agents, drying agents, release agents, parting agents, preservatives, antimicrobial agents, anticorrosion agents, antioxidants, coalescing aids.

With or without the addition of any optional component(s), the erasable ink composition when applied to a substrate, and particularly a porous substrate such as a cellulosic paper, and upon drying thereon must be (1) sufficiently adherent to the substrate as to resist flaking therefrom and (2) substantially erasable. Thus, the dry erasable ink composition of this invention applied to paper and evaluated by the adherency test described infra will generally exhibit less than 30 weight percent flaking, preferably less than 20 weight percent flaking and even more preferably less than about 10 weight percent flaking. Erasability values delta E*ab of the erasable ink composition herein as measured by ASTM D-2244-89 will generally be on the order of less than 4.0, preferably less than 3.5 and even more preferably less than 3.0.

It is preferred that the erasable ink composition herein when evaluated by the smearability test described infra exhibit a subjectively determined low level of smear, e.g., a smear value of 2 or less and preferably a smear value of 1 (i.e., essentially no smearing).

The erasable ink composition of this invention is intended to be used in any of a variety of marking instruments and in particular, a ball-point pen.

The following examples are illustrative of the erasable ink composition of this invention.

### EXAMPLES ILLUSTRATING THE PREPARATION OF POLYESTER POLYOL DYE MONOMER

Polyester polyols obtained by reacting adipic acid, hexanediol and phenyldiethanolamine were obtained from Ruco (Hicksville, NY).

These polyester polyols are identified in Table 1 below:

**Table 1**

| Polyester Polyol | Monomer Radio (Adipic acid: phenyl diethanolamine: hexanediol) | Hydroxyl Number | Average Molecular Weight |
|---|---|---|---|
| A | 13:1:13 | 44.2 | 2539 |
| B | 13:1:13 | 33.3 | 3369 |
| C | 13:2:12 | 35.1 | 3197 |

A polyester polyol dye monomer (hereinafter "DM1") derived from polyester polyol A was formed as follows:

To a three neck round bottom flask equipped with a mechanical stirrer and addition funnel was added 45g of 85% H₃PO₄. The reaction flask was cooled to -5°C and 26.3g (0.083 moles) of 40% nitrosylsulfuric acid was added dropwise to the reaction flask while maintaining a temperature between -5 and 0°C with stirring. A slurry of 11.2g (0.069 moles) 2-amino-4-methyl-3,5-dicyanothiophene and approximately 20g 85% H₃PO₄ was added dropwise to the reaction flask via the addition funnel over a period of 30 minutes and allowed to stir at O°C for 1.5 hours to provide a diazonium salt solution.

After 1.5 hours, the presence of excess nitration species was determined qualitatively utilizing starch/iodide paper and any excess nitration species was removed by adding to the mixture a water solution of urea or sulfamic acid.

The diazonium salt solution was transferred via cannula to a solution of acetonitrile (400 ml) and 182.7g (0.072 moles) of polyester polyol A at 0°C with stirring. The reaction mixture was allowed to come to room temperature and stirred for 2 hours. The reaction mixture was neutralized using caustic. The solvent was removed under vacuum and a reddish-violet solid was obtained. This polyester polyol dye monomer was washed free of salts and other soluble materials with hot water.

A polyester polyol dye monomer (hereinafter "DM2") derived from polyester polyol B was formed as follows:

To a three neck round bottom flask equipped with a mechanical stirrer and addition funnel was added 45g of 85% H₃PO₄. The reaction flask was cooled to -5°C and 15. 51g (0.049 moles) of 40% nitrosylsulfuric acid was added dropwise to the reaction flask while maintaining a temperature between -5 and 0°C with stirring. A slurry of 6.88g (0.042 moles) 2-amino-4-methyl-3,5-dicyanothiophene and approximately 20g 85% H₃PO₄ was added dropwise to the reaction flask via the addition funnel over a period of 30 minutes and allowed to stir at 0°C for 1.5 hours to provide a diazonium salt solution.

After 1.5 hours, the presence of excess nitration species was determined qualitatively utilizing starch/iodide paper and any excess nitration species was removed by adding to the mixture a water solution of urea or sulfamic acid.

The diazonium salt solution was transferred via cannula to a solution of acetonitrile (400 ml) and 500g (0.148 moles) of polyester polyol B at 0°C with stirring. The reaction mixture was allowed to come to room temperature and stirred for 2 hours. The reaction mixture was neutralized using caustic. The solvent was removed under vacuum and a reddish-violet solid was obtained. This polyester polyol dye monomer was washed free of salts and other soluble materials with hot water.

A polyester polyol dye monomer (hereinafter "DM3") derived from polyester polyol C was formed as follows:

To a three neck round bottom flask equipped with a mechanical stirrer and addition funnel was added 45g of 85% H₃PO₄. The reaction flask was cooled to -5°C and 21.30g (0.067 moles) of 40% nitrosylsulfuric acid was added dropwise to the reaction flask while maintaining a temperature between -5 and 0°C with stirring. A slurry of 11. 16g (0.061 moles) 2,4-dinitroaniline and 30g of 85% H₃PO₄ was added dropwise to the reaction flask via the addition funnel over a period of 30 minutes and allowed to stir at 0°C for 2 hours to provide a diazonium salt solution.

After 2 hours, the presence of excess nitration species was determined qualitatively utilizing starch/iodide paper and any excess nitration species was removed by adding to the mixture a water solution of urea or sulfamic acid.

The diazonium salt solution was transferred via cannula to a water (500 ml) slurry of 300g (0.093 moles) of finely ground polyester polyol C at 0°C with stirring. The reaction mixture was allowed to come to room temperature and stirred for 2 hours. The reaction slurry was neutralized using caustic. A red solid was obtained. This polyester polyol dye monomer was collected via filtration and washed several times with hot water to remove salts and other water soluble material.

A polyester polyol dye monomer (hereinafter "DM4") derived from polyester polyol C was formed as follows:

To a three neck round bottom flask equipped with a mechanical stirrer and addition funnel was added 45g of 85% H₃PO₄. The reaction flask was cooled to -5°C and 54.62g (0.1721 moles) of 40% nitrosylsulfuric acid was added dropwise to the reaction flask while maintaining a temperature between -5 and 0°C with stirring. A slurry of 28.86g (0.156 moles) 2-amino-4-chlorobenzothiazole and 30g of 85% H₃PO₄ was added dropwise to the reaction flask via the addition funnel over a period of 30 minutes and allowed to stir at 0°C for 2 hours to provide a diazonium salt solution.

After 2 hours, the presence of excess nitration species was determined qualitatively utilizing starch/iodide paper and any excess nitration species was removed by adding to the mixture a water solution of urea or sulfamic acid.

The diazonium salt solution was transferred via cannula to water (500 ml) slurry of 500g (0.1564 moles) of finely ground polyester polyol C at 0°C with stirring. The reaction mixture was allowed to come to room temperature and stirred for 2 hours. The reaction slurry was neutralized using caustic. A red solid was obtained. This polyester polyol dye monomer was collected via filtration and washed several times with hot water to remove salts and other water soluble material.

A polyester polyol dye monomer (hereinafter "DM5") derived from polyester polyol C was formed as follows:

To a three neck round bottom flask equipped with a mechanical stirrer and addition funnel was added 45g of 85% H₃PO₄. The reaction flask was cooled to -5°C and 38.2g (0.12 moles) of 40% nitrosylsulfuric acid was added dropwise to the reaction flask while maintaining a temperature between -5 and 0°C with stirring. A slurry of 28.55g (0.109 moles) 2-bromo-4,6-dinitroaniline and 30g of 85% H₃PO₄ was added dropwise to the reaction flask via the addition funnel over a period of 30 minutes and allowed to stir at 0°C for 2 hours to provide a diazonium salt solution.

After 2 hours, the presence of excess nitration species was determined qualitatively utilizing starch/iodide paper and any excess nitration species was removed by adding to the mixture a water solution of urea or sulfamic acid.

The diazonium salt solution was transferred via cannula to a water (500 ml) slurry of 500g (0.156 moles) of finely ground polyester polyol C at O°C with stirring. The reaction mixture was allowed to come to room temperature and stirred for 2 hours. The reaction slurry was neutralized using caustic. A red solid was obtained. This polyester polyol dye monomer was collected via filtration and washed several times with hot water to remove salts and other water soluble material.

Waterborne polyurethane-urea dispersions were obtained from polyester polyol dye monomers DM1, DM2, DM3, DM4 and DM5, employing the pre-polymer mixing process, as follows:

### EXAMPLE 1

To a 2000 mL resin kettle equipped with an addition funnel, nitrogen inlet and mechanical stirrer was added DM5 (205.58g), dimethylolpropionic acid (DMPA) (8.99g) (dissolved in 20g N-methyl pyrrolidone) and dibutyltindilaurate (Fastcat 4202) catalyst (0.38g). The reaction mixture was heated to 60-70°C with stirring and isophorone diisocyanate (IPDI) (42.4g) was added over a period of 20-30 minutes to form a red colored isocyanate group-terminated prepolymer possessing free carboxyl groups. The prepolymer was stirred for 3-5 hours at temperature and the %NCO was monitored. When the theoretical %NCO was reached, triethylamine (5.91g) was added to the colored prepolymer and allowed to stir at temperature for 30 minutes. The self-dispersible prepolymer was dispersed in a sufficient amount of water using an impeller-type dispersion blade to provide a 35-50% solids dispersion. The dispersed prepolymer was then allowed to chain extend with water at 40°C to provide a red dispersion of polyurethane-urea particles possessing an average particle size of less than about 0.1 micron.

The above-described process was repeated to form Examples 2-8 as summarized in Table 2 as follows:

**Table 2**

| Example | Polyester polyol dye monomer/ amount(g) | Isocyanate/ amount(g) | DMPA (g) | Triethylamine(g) | Color |
|---|---|---|---|---|---|
| 2 | DM1/ 167.43 | m-TMXDI*/ 42.0 | 7.61 | 5.74 | Violet |
| 3 | DM1/ 194.79 | m-TMXDI/ 42.0 | 8.60 | 6.48 | Violet |
| 4 | DM2/ 82.44 | m-TMXDI/ 42.0 | 8.25 | 6.21 | Violet |
| 5 | DM3/ 228.36 | IPDI/ 42.4 | 8.37 | 6.95 | Red |
| 6 | DM4/ 205.58 | IPDI/ 42.4 | 8.59 | 6.78 | Red |
| 7 | DM4/ 129.71 | IPDI/ 42.4 | 15.65 | 5.89 | Red |
| 8 | DM5/ 249.86 | IPDI/ 42.4 | 10.60 | 7.99 | Red |

| | | | | | |
|---|---|---|---|---|---|
| *m-TMXDI= 1,3-bis(1-isocyanato-1-methylethyl)-benzene | | | | | |

The waterborne polyurethane-urea polymer dyes utilized in the erasable ink composition herein are less expensive to fabricate, possess superior oxidative stability and superior thermal stability compared to polyurethane-urea polymer dyes fabricated from colored polyether polyols such as the polyether polyols described in U.S. Patent No. 5, 231, 135. Furthermore, the polyurethane-urea dispersions fabricated from the polyester polyol dye monomers disclosed herein possess superior properties, e.g., water-fastness, compared to polyurethane-urea dispersions fabricated from the colored polyether polyols disclosed in U.S. Patent No. 5,231,135.

### EXAMPLES ILLUSTRATING THE PREPARATION OF POLYFUNCTIONAL PREPOLYMERS POSSESSING COVALENTLY BONDED DYE MOIETY

### EXAMPLE 9

Dimethylolpropionic acid (8.25g) was dissolved in N-methyl pyrrolidone (13.8g). To this solution, polytetramethylene glycol (TERETHANE T-2900 from Dupont) (208.2g), polyol colorant (15. 0g) corresponding to Colorant C from Table I of U.S. Patent No. 5,231,135, isophorone diisocyanate (42.40g) and dibutyltindilaurate catalyst (0.72g) were added. The solution was heated to a temperature of from about 60 to about 70°C for about 3 to about 5 hours under stirring. The color of the resulting isocyanate group-terminated prepolymer having dye covalently bonded thereto was red.

### EXAMPLE 10

Dimethylolpropionic acid (7.37g) was dissolved in N-methyl pyrrolidone (12.31g). To this solution, polytetramethylene glycol (TERETHANE T-2900 from Dupont) (151. 2g) and polybutylene glycol (BO-4800 from Dow Chemical) (84. 0g), polyol colorant (5. 0g) corresponding to Colorant C from Table I of U.S. Patent No. 5,231,135, isophorone diisocyanate (42.40g) and dibutyltindilaurate catalyst (0.48g) were added. The solution was heated to a temperature of from about 60 to about 70°C for about 3 to about 5 hours under stirring. The color of the resulting isocyanate group-terminated prepolymer having dye covalently bonded thereto was red.

### EXAMPLE 11

Dimethylolpropionic acid (3.50g) was dissolved in N-methyl pyrrolidone (5.84g). To this solution, polytetramethylene glycol (TERETHANE T-2900 from Dupont) (305.9g), polyol colorant (5.0g) corresponding to Colorant U from Table I of U.S. Patent No. 5,231,135, polyol colorant (5.0g) corresponding to Colorant G from Table I of U.S. Patent No. 5,231,135, isophorone diisocyanate (42.40g) and dibutyltindilaurate catalyst (0. 12g) were added. The solution was heated to a temperature of from about 60 to about 70°C for about 3 to about 5 hours under stirring. The color of the resulting isocyanate group-terminated prepolymer having dye covalently bonded thereto was violet-blue.

### EXAMPLE 12

Dimethylolpropionic acid (8.08g) was dissolved in N-methyl pyrrolidone (13.5g). To this solution, polytetramethylene glycol (TERETHANE T-2900 from Dupont) (184.5g), polyol colorant (5. 0g) corresponding to Colorant C from Table I of U.S. Patent No. 5,231,135, isophorone diisocyanate (42.40g) and dibutyltindilaurate catalyst (0.48g) were added. The solution was heated to a temperature of from about 60 to about 70°C for about 3 to about 5 hours under stirring. The color of the resulting isocyanate group-terminated prepolymer having dye covalently bonded thereto was red.

### EXAMPLE 13

Dimethylolpropionic acid (8.08g) was dissolved in N-methyl pyrrolidone (13.5g). To this solution, polytetramethylene glycol (TERETHANE T-2900 from Dupont) (174.6g), polyol colorant (5. 0g) corresponding to Colorant C from Table I of U.S. Patent No. 5,231,135, isophorone diisocyanate (42.40g) and dibutyltindilaurate catalyst (0.48g) were added. The solution was heated to a temperature of from about 60 to about 70°C for about 3 to about 5 hours under stirring. The color of the resulting isocyanate group-terminated prepolymer having dye covalently bonded thereto was red.

### EXAMPLE 14

Isophorone diisocyanate (42.40g) and polytetramethylene glycol (TERETHANE T-2900 from Dupont) (174.6g) were admixed. To this mixture, polyol colorant (5. 0g) corresponding to Colorant U from Table I of U.S. Patent No. 5,231,135, was added. The mixture was dissolved in methylethylketone (120g) and dibutyltindilaurate catalyst (0.24g) was added to the solution which was stirred at room temperature overnight. The color of the resulting isocyanate group-terminated prepolymer having dye covalently bonded thereto was violet.

### EXAMPLES. ILLUSTRATING THE PREPARATION OF POLYMER DYES

### EXAMPLE 15

The prepolymer mixing process was carried out as follows: the prepolymer of Example 9 was reacted with triethyl amine (6.22g) neutralizing agent to convert the carboxyl groups in the prepolymer to ammonium carboxylate groups and render the prepolymer self-dispersible. Thereafter, the self-dispersible prepolymer was dispersed in water (241g) using an impeller-type dispersion blade. The dispersed prepolymer was then reacted at room temperature with hydrazine (3.93g) chain extender to provide a dispersion of polyurethane-urea particles of approximately 55.0 weight percent solids.

### EXAMPLE 16

The prepolymer mixing process was carried out as follows: the prepolymer of Example 10 was reacted with triethyl amine (5.60g) neutralizing agent to convert the carboxyl groups in the prepolymer to ammonium carboxylate groups and render the prepolymer self-dispersible. Thereafter, the self-dispersible prepolymer was dispersed in water (300g) using an impeller-type dispersion blade. The dispersed prepolymer was then reacted at about 76° with hydrazine (5.76g) chain extender to provide a dispersion of polyurethane-urea particles of approximately 50.7 weight percent solids.

### EXAMPLE 17

The prepolymer mixing process was carried out as follows: the prepolymer of Example 11 was reacted with triethyl amine (2.64g) neutralizing agent to convert the carboxyl groups in the prepolymer to ammonium carboxylate groups and render the prepolymer self-dispersible. Thereafter, the self-dispersible prepolymer was dispersed in water (436g) using an impeller-type dispersion blade. The dispersed prepolymer was then reacted at room temperature with hydrazine (1.49g) chain extender to provide a dispersion of polyurethane-urea particles of approximately 45.9 weight percent solids.

### EXAMPLE 18

The prepolymer mixing process was carried out as follows: the prepolymer of Example 12 was reacted with triethyl amine (6.09g) neutralizing agent to convert the carboxyl groups in the prepolymer to ammonium carboxylate groups and render the prepolymer self-dispersible. Thereafter, the self-dispersible prepolymer was dispersed in water (300g) using an impeller-type dispersion blade. The dispersed prepolymer was then reacted at room temperature with hydrazine (5.82g) chain extender to provide a dispersion of polyurethane-urea particles of approximately 46.4 weight percent solids.

### EXAMPLE 19

The prepolymer mixing process was carried out as follows: the prepolymer of Example 13 was reacted with triethyl amine (6.09g) neutralizing agent to convert the carboxyl groups in the prepolymer to ammonium carboxylate groups and render the prepolymer self-dispersible. Thereafter, the self-dispersible prepolymer was dispersed in water (300g) using an impeller-type dispersion blade. The dispersed prepolymer was then reacted at room temperature with hydrazine (5.82g) chain extender to provide a dispersion of polyurethane-urea particles of approximately 46.9 weight percent solids.

### EXAMPLE 20

The solvent process was carried out as follows: the prepolymer of Example 14 dissolved in methylethylketone was reacted at room temperature with hydrazine (2.15g) chain extender to provide an organic solvent solution of polyurethane-urea of approximately 64.9 weight percent solids.

The properties of the polymer dyes of Examples 15-20 are presented in Table 3 as follows:

**Table 3**

| Example | Average Particle Size (Dry) (nm) | Color (Dry) | T_{g} ( °C |
|---|---|---|---|
| 15 | 50 - 500 | Red | <60 |
| 16 | 250 | Red | <60 |
| 17 | 250 - 2000 | Violet-blue | <60 |
| 18 | 150 | Red | <60 |
| 19 | 150 | Red | <60 |
| 20 | N/A (solution) | Violet | <60 |

The polymer dye compositions of Examples 15-20 can be directly employed as erasable ink compositions or be combined with one or more optional components such as an emulsion prior to being employed as erasable ink compositions.

To further illustrate the erasable ink composition of this invention, the polymer dye of Example 15 was combined with a silicone emulsion, i.e., SWS-233 Silicone Emulsion from Wacker Chemical Corp., to provide an erasable ink composition (Example 21) containing 90 weight percent polymer dye and 10 weight percent silicone emulsion. In another example, the polymer dye of Example 17 was combined with an emulsion containing 25.0 weight percent sorbitan sesquioleate, i.e., Glycomol SOC from Lonza, 1.67 weight percent sodium dodecylbenzenesulfonate, i.e., Rhodocal DS4 from Rhone Poulenc, and 71.66 weight percent water to provide an erasable ink composition (Example 22) containing 90 weight percent polymer dye and 10 weight percent of the emulsion.

The properties of the erasable ink composition of Examples 21 and 22 were evaluated. In particular, the color intensity, viscosity, adherency, erasability and smearability of the erasable ink composition were evaluated.

Color intensity was evaluated by a subjective visual evaluation of script.

Adherency was determined by performing a drawdown on preweighed Linetta drawdown paper with 0.8g of sample (spread over an area of 0.635 cm. (¼ inch) x 3.81 cm. (1½ inch)) and drawn down with a #6 cater-bar. The sample was allowed to dry completely (approximately 5 minutes at room temperature) and the paper was weighed again. The paper was then crumpled by hand to approximately the same extent for each sample tested, thereafter uncrumpled, any flakes were blown off and the paper was reweighed. This test was also performed with erasable ink made according to U.S. Patent Nos. 5,120,359 and 5,203,913 (Comparative Example 1).

Erasability was determined by performing an actual "WRITE-TEST" (similar to a spirograph wherein ink is applied in a circular arrangement on paper with some cross-over of ink occurring) with ball-point pens containing the erasable ink composition of Examples 21 and 22 and the following commercially available pens which contain erasable ink:

| Pen | Ink Color | Comparative Example |
|---|---|---|
| Erasermate | Blue | 2 |
| Erasermate 2 | Blue | 3 |
| Scripto | Blue | 4 |
| Scripto | Red | 5 |

The "WRITE-TEST" write-downs were then erased and reflectance measurements were performed on the erased portion of the paper versus an unblemished/untouched portion of the paper. A quantitative value was then obtained, i.e., delta E*ab from CIE lab measurement (described in ASTM D-2244-89). Lower values indicate more complete erasures.

Smearability was subjectively evaluated for the erasable ink composition of Examples 21 and 22 and Comparative Examples 2-5 1-2 seconds after writing by attempting to smudge the ink with one's fingers. A smear value of 1 represents essentially no smearing and a smear value of 5 represents such a degree of smearing that legibility of the writing is significantly impaired.

Table 4 below presents the properties of the erasable ink compositions:

**Table 4**

| Example | Color Intensity | Viscosity (cps) | (Wt. % of Dried Ink Composition Retained on the Paper) | Erasability Value (delta E*ab) | Smear Value |
|---|---|---|---|---|---|
| 21 | Comparable to Comparative Examples | -3-5 | 100% | 3.17 | 1 |
| | | | | | |
| 22 | Comparable to Comparative Examples | -3-5 | 100% | 1.44 | 1 |
| | | | | | |
| Comp. Ex. 1 | - | - | 63% | - | - |
| | | | | | |
| Comp. Ex. 2 | - | - | - | 3.3 | 2 |
| | | | | | |
| Comp. Ex. 3 | - | - | - | 3.63 | 2 |
| | | | | | |
| Comp. Ex. 4 | - | - | - | 5.38 | 3 |
| | | | | | |
| Comp. Ex. 5 | - | - | - | - | 4 |

The data in Table 4 clearly demonstrate the superiority of the erasable ink composition of this invention relative to commercially available erasable inks. The erasable ink composition of this invention is highly adherent to a substrate as to resist flaking therefrom and substantially erasable.

## Claims

1. An erasable ink composition which comprises (a) a waterborne polyurethane-urea possessing a sufficient number of ionic groups in its structure as to be water dispersible, obtained by effecting polymerization of a waterborne-polyurethane-urea forming reaction medium containing at least two coreactive polyfunctional monomers, wherein at least one of the monomers possesses a dye moiety covalently bonded thereto and (b) an evaporable liquid carrier in which the polymer dye is dissolved, dispersed or swollen; the erasable ink composition when applied to a porous substrate such as cellulosic paper and upon drying thereon exhibiting less than 30 weight percent flaking based on the weight of the dried ink and an erasability value delta E*ab of less than 4.0.

2. The erasable ink composition of Claim 1 exhibiting less than 20 weight percent flaking based on the weight of the dried ink and an erasability value delta E*ab of less than 3.5.

3. The erasable ink composition of Claim 1 exhibiting less than 10 weight percent flaking based on the weight of the dried ink and an erasability value delta E*ab of less than 3.0.

4. The erasable ink composition of Claim 1 wherein the waterborne polyurethane-urea is obtained by the solvent process, the melt dispersion process, the prepolymer mixing process or the ketamine/ketazine process.

5. The erasable ink composition of Claim 1 wherein the waterborne polyurethane-urea is obtained by the solvent process which comprises:
(a) reacting a polymeric polyol with a diisocyanate to provide an isocyanate group-terminated prepolymer possessing or lacking sufficient hydrophilic groups to render the prepolymer self-dispersible;
(b) reacting the isocyanate group-terminated prepolymer dissolved in organic solvent with an aliphatic diamine chain extender and, where the prepolymer lacks sufficient hydrophilic groups to be self-dispersible, an aliphatic diamine chain extender possessing at least one hydrophilic group, to provide an organic solvent solution of self-dispersible polyurethane-urea; and,
(c) adding a sufficient amount of water to the organic solvent solution of the polyurethane-urea to form a dispersion of polyurethane-urea particles,
at least one of said polymeric polyol, diisocyanate and aliphatic diamine possessing a dye moiety covalently bonded thereto.

6. The erasable ink composition of Claim 5 wherein the polymeric polyol is a polymeric diol of the general formula R(P-OH)₂ wherein R is a dye moiety covalently bonded to polymer residue P and each P is the same or different.

7. The erasable ink composition of Claim 6 wherein polymer residue P is that of a polyether, polyester or polycarbonate.

8. The erasable ink composition of Claim 1 wherein the waterborne polyurethane-urea is obtained by the melt dispersion process which comprises
(a) reacting a polymeric polyol, an aliphatic diol possessing at least one ionic group and a diisocyanate to provide an isocyanate group terminated prepolymer possessing ionic groups;
(b) reacting the isocyanate group-terminated prepolymer with a formaldehyde-reactive capping agent to cap the isocyanate end groups;
(c) dispersing the capped prepolymer in water; and,
(d) reacting the dispersed capped prepolymer with formaldehyde to provide dispersed polyurethane-urea particles,
at least one of said polymeric polyol, diisocyanate and aliphatic diamine possessing a dye moiety covalently bonded thereto.

9. The erasable ink composition of Claim 8 wherein the polymeric polyol is a polymeric diol of the general formula R(P-OH)₂ wherein R is a dye moiety covalently bonded to polymer residue P and each P is the same or different.

10. The erasable ink composition of Claim 9 wherein polymer residue P is that of a polyether, polyester or polycarbonate.

11. The erasable ink composition of Claim 1 wherein the waterborne polyurethane-urea is obtained by the prepolymer mixing process which comprises:
(a) reacting a polymeric polyol, a carboxylic group-containing diol and an aliphatic diisocyanate to provide an isocyanate group-terminated prepolymer possessing free carboxyl groups;
(b) reacting the prepolymer with a tertiary amine to convert the carboxyl groups to ammonium carboxylate groups and render the prepolymer self-dispersible;
(c) dispersing the self-dispersible prepolymer in water; and,
(d) reacting the dispersed prepolymer with a diamine chain extender to provide an aqueous dispersion of polyurethane-urea particles.
at least one of said polymeric polyol, carboxyl group-containing diol, aliphatic diisocyanate and aliphatic liquid diamine chain extender possessing a dye moiety covalently bound thereto.

12. The erasable ink composition of Claim 11 wherein the polymeric polyol is a polymeric diol of the general formula R(P-OH)₂ wherein R is a dye moiety covalently bonded to polymer residue P and each P is the same of different.

13. The erasable ink composition of Claim 12 wherein polymer residue P is that of a polyether, polyester or polycarbonate.

14. The erasable ink composition of Claim 1 wherein the waterborne polyurethane-urea is obtained by the ketamine/ketazine process which comprises:
(a) reacting a polymeric polyol, a carboxylic group-containing diol and a diisocyanate to provide an isocyanate group-terminated prepolymer possessing free carboxyl groups;
(b) reacting the prepolymer with a tertiary amine to convert the carboxyl groups to ammonium carboxylate groups and render the prepolymer self-dispersible;
(c) reacting the self-dispersible prepolymer with at least one member of the group consisting of ketamine and ketazine in the presence of water to provide an aqueous dispersion of polyurethane-urea particles,
at least one of said polymeric polyol, carboxyl group-containing diol, aliphatic diisocyanate and aliphatic liquid diamine chain extender possessing a dye moiety covalently bound thereto.

15. The erasable ink composition of Claim 14 wherein the polymeric polyol is a polymeric diol of the general formula R(P-OH)₂ wherein R is a dye moiety covalently bonded to polymer residue P and each P is the same or different.

16. The erasable ink composition of Claim 15 wherein polymer residue P is that of a polyether, polyester or polycarbonate.

17. The erasable ink composition of Claim 1 wherein at least one of said monomers includes structural units of the general formula: 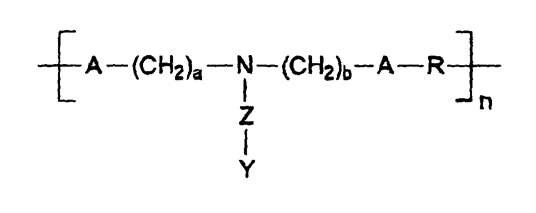 wherein each A independently can be an ester or amide linkage, n can be an integer of from about 1 to 50, R is an aliphatic or aromatic hydrocarbon with up to 30 carbon atoms, a and b are independently from 1 to 10, 2 is a substituted or unsubstituted arvlene group or a single bond when Y is an anthraquinone group and Y is a dye moiety selected from the group consisting of an azo, tricyanovinyl, anthraquinone and methine groups.

18. The erasable ink composition of claim 17 wherein Z is a substituted arylene group which is substituted with one or more substituents selected from the group consisting of halogen, hydroxyl, -CHO, alkyl, alkoxy, alkylamino, dialkylamino, amide, alkylamide, -NH₂, -NO₂, phenyl, carbamyl, -CN, carbalkoxy, sulfonyl, sulfamyl and sulfamino.

19. An erasable ink composition of claim 17 wherein Y is an azo group of the formula -N=N-D or -N=N-G-N=N-D wherein D is an aromatic nucleus of 1 to 5 rings (fused or connected by single bonds) or a heterocyclic ring of 4, 5 or 6 members containing one to four or more atoms of -N-, - S- and nonperoxidic atoms -O- and optionally bearing one or more auxochromic groups selected from the group consisting of -Cl, -Br, -F, -OH, alkyl, alkoxy, alkylamino, dialkylamino, -NH₂, -NO₂, phenyl, carbamoyl, -CN, carbalkoxy, sulfonyl, sulfamyl and sulfamido and G is a phenylene or naphthylene group.

20. The erasable ink composition of claim 17 wherein Y is a tricyanovinyl group of the formula:

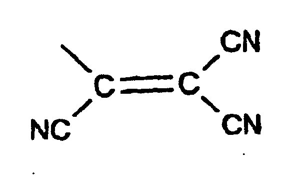

21. The erasable ink composition of claim 17 wherein Y is a monovalent anthraquinone group of the formula: 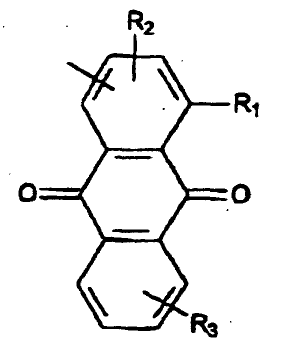 wherein R₁, R₂ and R₃ each independently can be -OH, -NH₂, alkylamino, dialkylamino or arylamino where aryl is phenyl or phenyl substituted by auxochromic groups selected from the group consisting of -Cl, -Br, -F, -OH, alkyl, alkoxy, alkylamino, dialkylamino, -NH₂, -NO₂, phenyl, carbamoyl,-CN, carbalkoxy, sulfonyl, sulfamyl and sulfamido and G is a phenylene or naphthylene group.

22. The erasable ink composition of claim 17 wherein Y is a methine group of the formula: 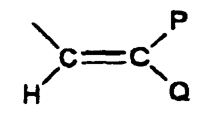 wherein P and Q are independently selected from cyano, carbalkoxy, carbaryloxy, carbaralkyloxy, carbamyl, carboxy, N-alkylcarbamyl, N-alkyl-N-arylcarbamyl, N, N-diakylcarbamyl, N-arylcarbamyl, N-cyclohexylcarbamyl, aryl, 2-benzoxazolyl, 2-benzothiazolyl, 2-benzimidazolyl, 1,3,4-thiadiazol-2-yl, 1,3,4-oxadiazol-2-yl, SO₂ alkyl, SO₂ aryl and acyl or P and Q in =CPQ may be combined as 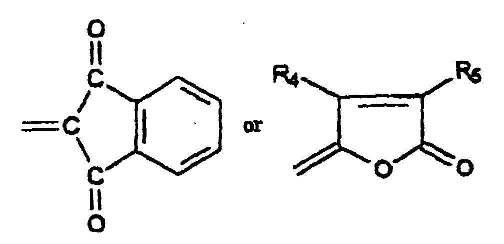 wherein R₄ is alkyl, aryl or cycloalkyl and R₅ is CN, COOH, CO₂ alkyl, carbamyl or N-alkylcarbamyl, wherein each alkyl, aryl or cycloalkyl moiety or portion of a group or radical may be substituted with one or more auxochromic groups selected from the group consisting of -Cl, -Br, -F, -OH, alkyl, alkoxy, alkylamino, dialkylamino, -NH₂, -NO₂, phenyl, carbamoyl, -CN, carbalkoxy, sulfonyl, sulfamyl and sulfamido.

23. The erasable ink composition of claim 17 wherein the polyurethane-urea is linear and n is from 1 to 5.

24. The erasable ink composition of claim 17 wherein the waterborne polyurethane-urea is obtained by the solvent process which comprises:
a) reacting a dye monomer which includes structural units of the general formula: 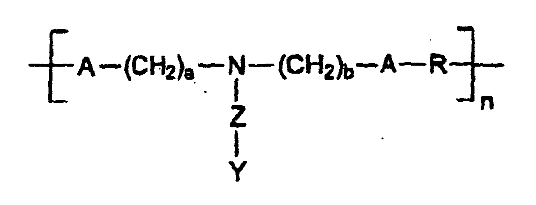 wherein each A independently can be an ester or amide linkage, n can be an integer of from 1 to 50, R is an aliphatic or aromatic hydrocarbon with up to 30 carbon atoms, a and b are independently from 1 to 10, Z is an unsubstituted arylene group, an arylene group substituted with one or more substituents selected from the group consisting of halogen, hydroxyl, -CHO, alkyl, alkoxy, alkylamino, dialkylamino, amide, alkylamide, -NH2, -NO₂, phenyl, carbamyl, -CN, carbalkoxy, sulfonyl, sulfamyl and sulfamido or a single bond when Y is an anthraquinone group and Y is a dye moiety selected from a group consisting of an azo, tricyanovinyl, anthraquinone and methine group with a diisocyanate to provide an isocyanate group-terminated prepolymer possessing or lacking sufficient hydrophilic groups to render the prepolymer self-dispersible;
b) reacting the isocyanate group-termined prepolymer dissolved in organic solvent with an aliphatic diamine chain extender and, where the prepolymer lacks sufficient hydrophilic groups to be self-dispersible, an aliphatic diamine chain extender possessing at least one hydrophilic group to provide an organic solvent solution of self-dispersible polyurethane-urea; and
c) adding a sufficient amount of water to the organic solvent solution of the polyurethane-urea to form a dispersion of polyurethane-urea particles.

25. The erasable ink composition of claim 17 wherein the waterborne polyurethane-urea is obtained by the melt dispersion process which comprises:
a) reacting dye monomer which includes structural units of the general formula: 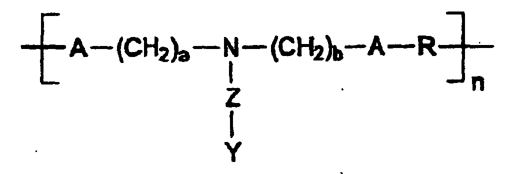 wherein each A independently can be an ester or amide linkage, n can be an integer of from 1 to 50, R is an aliphatic or aromatic hydrocarbon with up to 30 carbon atoms, a and b are independently from 1 to 10, Z is an unsubstituted arylene group an arylene group substituted with one or more substituents selected from the group consisting of halogen, hydroxyl, -CHO, alkyl, alkoxy, alkylamino, dialkylamino, amide, alkylamide, -NH₂, -NO₂, phenyl, carbamyl, -CN, carbalkoxy, sulfonyl, sulfamyl and sulfamido or a single bond when Y is an anthraquinone group and Y is a dye moiety selected from the group consisting of an azo, tricyanovinyl, anthraquinone and methine group, an aliphatic diol possessing at least one ionic group and diisocyanate to provide an isocyanate group terminated prepolymer possessing ionic groups;
b) reacting the isocyanate group-terminated prepolymer with a formaldehyde-reactive capping agent to cap the isocyanate end groups;
c) dispersing the capped prepolymer in water; and,
d) reacting the dispersed capped prepolymer with formaldehyde to provide dispersed polyurethane-urea particles.

26. The erasable ink composition of claim 17 wherein the waterborne polyurethane-urea is obtained by the prepolymer mixing process which comprises:
a) reacting a dye monomer which includes structural units of the general formula: 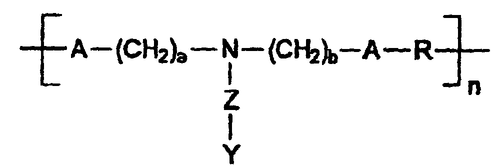 wherein each A independently can be an ester or amide linkage, n can be an integer of from about 1 to about 50, R is an aliphatic or aromatic hydrocarbon with up to about 30 carbon atoms, a and b are independently from 1 to about 10, Z is an unsubstituted arylene group, an arylene group substituted with one or more substituents selected from the group consisting of halogen, hydroxyl, -CHO, alkyl, alkoxy, alkylamino, dialkylamino, amide, alkylamide, -NH₂, -NO₂, phenyl, carbamyl, -CN, carbalkoxy, sulfonyl, sulfamyl and sulfamido or a single bond when Y is an anthraquinone group and Y is a dye moiety selected from the group consisting of an azo, tricyanovinyl, anthraquinone and methine group, a carboxylic group-containing diol and an aliphatic diisocyanate to provide an isocyanate group-terminated prepolymer possessing free carboxyl groups;
b) reacting the prepolymer with a tertiary amine to convert the carboxyl groups to ammonium carboxylate groups and render the prepolymer self-dispersible;
c) dispersing the self-dispersible prepolymer in water; and
d) reacting the dispersed prepolymer with a diamine chain extender to provide an aqueous dispersion of polyurethane-urea particles.

27. The erasable ink composition of Claim 17 wherein the waterborne polyurethane urea is obtained by the ketamine/ketazine process which comprises:
a) reacting a dye monomer which includes structural units of the general formula: 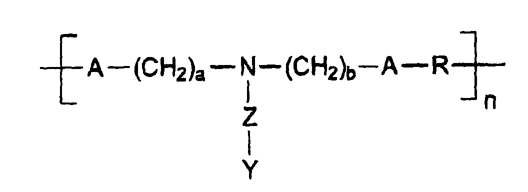 wherein each A independently can be an ester or amide linkage, n can be an integer of from 1 to 50, R is an aliphatic or aromatic hydrocarbon with up to 30 carbon atoms, a and b are independently from 1 to 10, Z is an unsubstituted arylene group, an arylene group substituted with one or more substituents selected from the group consisting of halogen, hydroxyl, -CHO, alkyl, alkoxy, alkylamino, dialkylamino, amide, alkylamide, -NH₂, -NO₂, phenyl, carbamyl, -CN, carbalkoxy, sulfonyl, sulfamyl and sulfamido or a single bond when Y is an anthraquinone group and Y is a dye moiety selected from the group consisting of an azo, tricyanovinyl, anthraquinone and methine group, a carboxylic group-containing diol and an aliphatic diisocyanate to provide an isocyanate group-terminated prepolymer possessing free carboxyl groups;
b) reacting the prepolymer with a tertiary amine to convert the carboxyl groups to ammonium carboxylate groups and render the prepolymer self-dispersible; and
c) reacting the self-dispersible prepolymer with at least one member of the group consisting of ketimine and ketazine in the presence of water to provide an aqueous dispersion of polyurethane-urea particles.

28. The erasable ink composition of Claim 1 wherein the composition further comprises at least one additional component selected from the group consisting of natural lattices, synthetic lattices, rheological modifiers, suspension agents, humectants, emulsifiers, surfactants, plasticizers, spreading agents, drying agents, release agents, parting agents, preservatives, antimicrobial agents, anticorrosion agents, antioxidants and coalescing aids.

29. The erasable ink composition of Claim I wherein the composition possesses a viscosity of from 2 to 80,000 centipoises.

30. The erasable ink composition of Claim 1 wherein the composition possesses a viscosity of from 3 to 30,000 centipoises.

31. The erasable ink composition of Claim 1 where at least one of the monomers corresponds to the general formula
(R)ₐ(P[X]_{b})_{c}
wherein R is a dye moiery covalently bonded to polymer residue P, X is a functional group, a, b and c each is at least 1, provided, the product of b x c is at least 2, when c is at least 2, a is 1 and where there is more than one R, P or X, each R, P or X can be the same or different.

32. A marking instrument containing the erasable ink composition of any of claims 1 to 31.

33. The marking instrument of Claim 32 which is a ball-point pen.

34. A waterborne polyurethane-urea obtained by by effecting polymerization of a waterborne polyurethane-urea forming reaction medium containing at least two coreactive polyfunctional monomers, wherein at least one of the monomers contains strutural units of the formula: 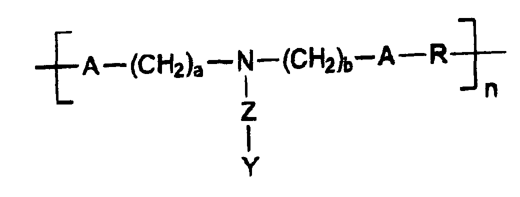 wherein each A independently can be an ester or amide linkage, n can be an integer of from about 1 to about 50, R is an aliphatic or aromatic hydrocarbon with up to about 30 carbon atoms, a and b are independently from 1 to about 10, Z is a substituted or unsubstituted arylene group or a single bond when Y is an anthraquinone group and Y is a dye moiety selected From the group consisting of an azo, tricyanovinyl, anthraquinone and methine group.

35. A polymer containing structural units of the general formula: 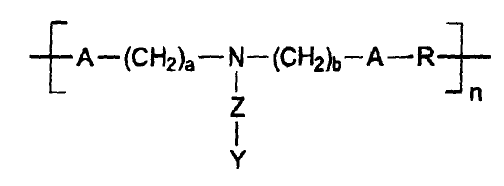 wherein each A independently can be an ester or amide linkage, n can be an integer of from 1 to 50, R is an aliphatic or aromatic hydrocarbon with up to 30 carbon atoms, a and b are independently from 1 to 10, Z is a substituted or unsubstituted arylene group or a single bond when Y is an anthraquinone group and Y is a dye moiety selected from the group consisting of an azo, tricyanovinyl, anthraquinone and methine group.

36. The polymer of Claim 36 wherein Z is a substituted arylene group which is substituted with one or more substituents selected from the group consisting of halogen, hydroxyl, -CHO, alkyl, alkoxy, alkylamino, dialkylamino, amide, alkylamide, -NH₂,-NO₂, phenyl, carbamyl, -CN, carbalkoxy, sulfonyl, sulfamyl and sulfamino.

37. The waterborne polyurethane-urea of Claim 34 wherein Z is a substituted arylene group which is substituted with one or more substituents selected from the group consisting of halogen, hydroxyl, -CHO, alkyl, alkoxy, alkylamino, dialkylamino, amide, alkylamide, -NH₂, -NO₂, phenyl, carbamyl, -CN, carbalkoxy, sulfonyl, sulfamyl and sulfamino.

## Patentansprüche

1. Zusammensetzung für eine radierbare Tinte, die umfaßt
(a) einen Polyurethan-Harnstoff auf Wasserbasis, der eine ausreichende Anzahl von ionischen Gruppen in seiner Struktur aufweist, um Wasser dispergierbar zu sein, der erhalten wird durch Polymerisation eines Reaktionsmediums zur Bildung eines Polyurethan-Harnstoffs auf Wasserbasis, das wenigstens zwei miteinander reagierende polyfunktionelle Monomere enthält, wobei wenigstens eines der Monomeren eine daran kovalent gebundene Farbstoffeinheit aufweist; und (b) einen flüchtigen flüssigen Träger, in dem der Polymerfarbstoff gelöst, dispergiert oder gequollen ist; wobei die Zusammensetzung für die radierbare Tinte dann, wenn sie auf ein poröses Substrat wie Cellulosepapier aufgetragen und darauf aufgetrocknet ist, weniger als 30 Gew. -% Flockenbildung, bezogen auf das Gewicht der getrockneten Tinte, sowie einen Radierbarkeitswert Delta E*ab von weniger als 4,0 aufweist.

2. Zusammensetzung für eine radierbare Tinte nach Anspruch 1, die weniger als 20 Gew. -% Flockenbildung, bezogen auf das Gewicht der getrockneten Tinte, sowie einen Radierbarkeitswert Delta E*ab von weniger als 3,5 aufweist.

3. Zusammensetzung für eine radierbare Tinte nach Anspruch 1, die weniger als 10 Gew. -% Flockenbildung, bezogen auf das Gewicht der getrockneten Tinte, sowie einen Radierbarkeitswert Delta E*ab von weniger als 3,0 aufweisen.

4. Zusammensetzung für eine radierbare Tinte nach Anspruch 1, wobei der Polyurethan-Harnstoff auf Wasserbasis nach einem Lösemittelverfahren, einem Schmelzdispergierverfahren, einem Präpolymer-Mischverfahren oder dem Ketamin/Ketazin-Verfahren erhalten wurde.

5. Zusammensetzung für eine radierbare Tinte nach Anspruch 1, bei der der Polyurethan-Harnstoff auf Wasserbasis nach dem Lösemittelverfahren erhalten wird, das umfaßt:
(a) Umsetzen eines polymeren Polyols mit einem Diisocyanat, um ein mit Isocyanatgruppen terminiertes Präpolymer zu bilden, das ausreichend viele hydrophile Gruppen aufweist oder nicht aufweist, um das Präpolymer selbstdispergierend zu machen;
(b) Umsetzen des mit Isocyanatgruppen terminierten Präpolymers, das in einem organischen Lösemittel aufgelöst ist, mit einem Kettenverlängerer in Form eines aliphatischen Diamins, und, wenn dem Präpolymer für eine Selbstdispergierbarkeit ausreichende hydrophile Gruppen fehlen, mit einem Kettenverlängerer in Form eines aliphatischen Diamins, das wenigstens eine hydrophile Gruppe aufweist, um eine Lösung des selbstdispergierenden Polyurethan-Harnstoffs in einem organischen Lösemittel zu erzeugen; und
(c) Zugeben einer ausreichenden Menge an Wasser zu der Lösung des Polyurethan-Harnstoffs in dem organischen Lösemittel, um eine Dispersion von Polyurethan-Harnstoff-Teilchen zu bilden,
wobei wenigstens eines von dem polymeren Polyol, dem Diisocyanat und dem aliphatischen Diamin eine kovalent daran gebundene Farbstoffeinheit aufweist.

6. Zusammensetzung für eine radierbare Tinte nach Anspruch 5, wobei das polymere Polyol ein polymeres Diol der allgemeinen Formel R(P-OH)₂ ist, worin R eine Farbstoffeinheit ist, die kovalent an den Polymer-Rest P gebunden ist, und wobei jedes P gleich oder unterschiedlich ist.

7. Zusammensetzung für eine radierbare Tinte nach Anspruch 6, wobei der Polymer-Rest P der eines Polyethers, Polyesters oder Polycarbonats ist.

8. Zusammensetzung für eine radierbare Tinte nach Anspruch 1, wobei der Polyurethan-Harnstoff auf Wasserbasis nach einem Schmelzdispersionsverfahren erhalten wird, das umfaßt:
(a) Umsetzen eines polymeren Polyols, eines aliphatischen Diols, das wenigstens eine ionische Gruppe besitzt, sowie eines Diisocyanats, um ein mit Isocyanatgruppen terminiertes Präpolymer zu bilden, das ionische Gruppen besitzt;
(b) Umsetzen des mit Isocyanatgruppen terminierten Präpolymers mit einem mit Formaldehyd reaktiven Verkappungsmittel, um die Isocyanatendgruppen zu verkappen;
(c) Dispergieren des verkappten Präpolymers in Wasser; und
(d) Umsetzen des dispergierten verkappten Präpolymers mit Formaldehyd, um dispergierte Polyurethan-Harnstoff-Teilchen zu bilden,
wobei wenigstens eines von dem polymeren Polyols, dem Diisocyanat und dem aliphatischen Diamin eine kovalent daran gebundene Farbstoffeinheit besitzt.

9. Zusammensetzung für eine radierbare Tinte nach Anspruch 8, wobei das polymere Polyol ein polymeres Diol der allgemeinen Formal R(P-OH)₂ ist, worin R eine Farbstoffeinheit ist, die kovalent an den Polymer-Rest P gebunden ist, und wobei jedes P gleich oder unterschiedlich ist.

10. Zusammensetzung für eine radierbare Tinte nach Anspruch 9, wobei der Polymer-Rest P der eines Polyethers, Polyesters oder Polycarbonats ist.

11. Zusammensetzung für eine radierbare Tinte nach Anspruch 1, wobei der Polyurethan-Harnstoff auf Wasserbasis durch ein Präpolymer-Mischverfahren erhalten wird, das umfaßt:
(a) Umsetzen eines polymeren Polyols, eines Carboxylgruppen enthaltenden Diols und eines aliphatischen Diisocyanats, um ein mit Isocyanatgruppen terminiertes Präpolymer zu bilden, das freie Carboxylgruppen besitzt;
(b) Umsetzen des Präpolymers mit einem tertiären Amin, um die Carbonsäuregruppen in Ammoniumcarboxylatgruppen zu überführen und das Präpolymer selbstdispergierbar zu machen;
(c) Dispergieren des selbstdispergierbaren Präpolymers in Wasser; und
(d) Umsetzen des dispergierten Präpolymers mit einem Diamin-Kettenverlängerer, um eine wäßrige Dispersion von Polyurethan-Harnstoff-Teilchen zu bilden,
wobei wenigstens eines von dem genannten polymeren Polyol, dem Carboxylgruppen enthaltenden Diol, dem aliphatischen Diisocyanat und dem Kettenverlängerer in Form eines aliphatischen flüssigen Diamins eine kovalent daran gebundene Farbstoffeinheit besitzt.

12. Zusammensetzung für eine radierbare Tinte nach Anspruch 11, wobei das polymere Polyol ein polymeres Diol der allgemeinen Formel R(P-OH)₂ ist, worin R eine Farbstoffeinheit ist, die kovalent an den Polymer-Rest P gebunden ist, und wobei jedes P gleich oder verschieden ist.

13. Zusammensetzung für eine radierbare Tinte nach Anspruch 12, wobei der Polymer-Rest P der eines Polyethers, Polyesters oder Polycarbonats ist.

14. Zusammensetzung für eine radierbare Tinte nach Anspruch 1, wobei der Polyurethan-Harnstoff auf Wasserbasis nach dem Ketamin/Ketazin-Verfahren erhalten wird, das umfaßt:
(a) Umsetzen eines polymeren Polyols, eines Carboxylgruppen enthaltenden Diols und eines Diisocyanats, um ein mit Isocyanatgruppen terminiertes Präpolymer zu bilden, das freie Carboxylgruppen besitzt;
(b) Umsetzen des Präpolymers mit einem tertiären Amin, um die Carboxylgruppen in Ammoniumcarboxylatgruppen zu überführen und das Präpolymer selbstdispergierend zu machen;
(c) Umsetzen des selbstdispergierenden Präpolymers mit wenigstens einem Glied aus einer Gruppe, die besteht aus Ketamin und Ketazin in Gegenwart von Wasser, um eine wäßrige Dispersion von Polyurethan-Harnstoff-Teilchen zu bilden,
wobei wenigstens eines von dem polymeren Polyol, dem Carboxylgruppen enthaltenden Diol, dem aliphatischen Diisocyanat und dem Kettenverlängerer in Form eines aliphatischen flüssigen Diamins eine kovalent daran gebundene Farbstoffeinheit besitzt.

15. Zusammensetzung für eine radierbare Tinte nach Anspruch 14, wobei das polymere Polyol ein polymeres Diol der allgemeinen Formel R(P-OH)₂ ist, worin R eine Farbstoffeinheit ist, die an den Polymer-Rest P gebunden ist, und wobei jedes P gleich oder verschieden ist.

16. Zusammensetzung für eine radierbare Tinte nach Anspruch 15, wobei der Polymer-Rest P der eines Polyethers, Polyester oder Polycarbonats ist.

17. Zusammensetzung für eine radierbare Tinte nach Anspruch 1, wobei wenigstens eines der Monomeren Struktur-Einheiten der allgemeinen Formel beinhaltet: 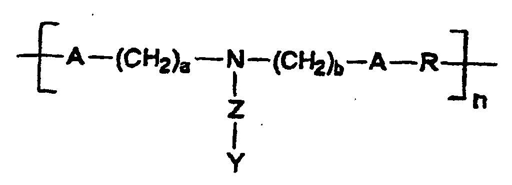 worin jedes A unabhängig voneinander eine Ester- oder Amid-Bindung sein kann, n eine ganze Zahl von 1 bis 50 sein kann, R ein aliphatischer oder aromatischer Kohlenwasserstoff mit bis zu 30 Kohlenstoffatomen ist, a und b unabhängig voneinander von 1 bis 10 betragen, Z eine substituierte oder unsubstituierte Arylengruppe oder eine Einfach-Bindung ist, wenn Y eine Anthrachinon-Gruppe ist, und Y eine Farbstoffeinheit ist, die aus der Gruppe ausgewählt ist, die besteht aus Azo-, Tricyanovinyl-, Anthrachinon- und Methin-Gruppen.

18. Zusammensetzung für eine radierbare Tinte nach Anspruch 17, wobei Z eine substituierte Arylen-Gruppe ist, die mit einem oder mehreren Substituenten substituiert ist, die ausgewählt ist aus der Gruppe, die besteht aus Halogen, Hydroxyl, -CHO, Alkyl, Alkoxy, Alkylamino, Dialkylamino, Amid, Alkyamid, -NH₂, -NO₂, Phenyl, Carbamyl, -CN, Carbalkoxy, Sulfonyl, Sulfamyl und Sulfamino.

19. Zusammensetzung für eine radierbare Tinte nach Anspruch 17, worin Y eine Azo-Gruppe der Formel-N=N-D oder -N=N-G-N=N-D ist, worin D ein aromatischer Kern mit 1 bis 5 Ringen (kondensiert oder durch Einfach-Bindungen verbunden) oder ein heterocyclischer Ring aus 4, 5 oder 6 Gliedern ist, der von einem bis vier oder mehr der Atome -N-, -S- und nichtperoxidische Atome -O- enthält und ggf. eine oder mehrere auxochrome Gruppen trägt, die aus der Gruppe ausgewählt sind, die besteht aus -Cl, -Br, -F, -OH, Alkyl, Alkoxy, Alkylamino, Dialkylamino, -NH₂, Phenyl, Carbamoyl, -CN, Carbalkoxy, Sulfonyl, Sulfamyl und Sulfamido, und G eine Phenylen- oder Naphthylen-Gruppe ist.

20. Zusammensetzung für eine radierbare Tinte nach Anspruch 17, worin Y eine Tricyanovinyl-Gruppe der Formel ist:

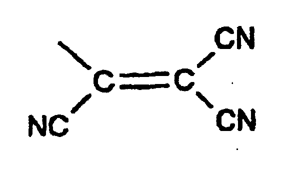

21. Zusammensetzung für eine radierbare Tinte nach Anspruch 17, worin Y eine monovalente Anthrachinon-Gruppe der Formel ist: 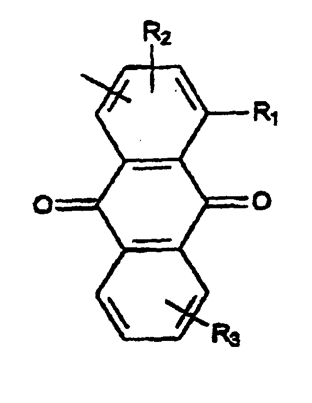 worin R₁, R₂ und R₃ jeweils unabhängig voneinander -OH, -NH₂, Alkylamino, Dialkylamino oder Arylamino sein können, wobei Aryl Phenyl ist oder ein Phenyl ist, das durch auxochrome Gruppen substituiert ist, die aus der Gruppe ausgewählt sind, die besteht aus -Cl, -Br, -F, -OH, Alkyl, Alkoxy, Alkylamino, Dialkylamino, -NH₂, -NO₂, Phenyl, Carbamoyl, -CN, Carbalkoxy, Sulfonyl, Sulfamyl und Sulfamido, und G eine Phenylen- oder Naphthylen-Gruppe ist.

22. Zusammensetzung für eine radierbare Tinte nach Anspruch 17, worin Y eine Methin-Gruppe der Formel ist: 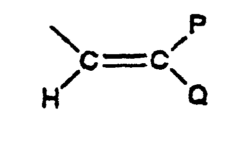 worin P und Q unabhängig voneinander ausgewählt sind aus Cyano, Carbalkoxy, Carbaryloxy, Carbaralkyloxy, Carbamyl, Carboxy, N-Alkylcarbamyl, N-Alkyl-N-Arylcarbamyl, N,N-Dialkylcarbamyl, N-Arylcarbamyl, N-Cyclohexylcarbamyl, Aryl, 2-Benzoxazolyl, 2-Benzothiazolyl, 2-Benzimidazolyl, 1,3,4-Thiadiazol-2-yl, 1,3,4-Oxadiazol-2-yl, SO₂-Alkyl, SO₂-Aryl und Acyl oder P und Q in = CPQ kombiniert sein können zu 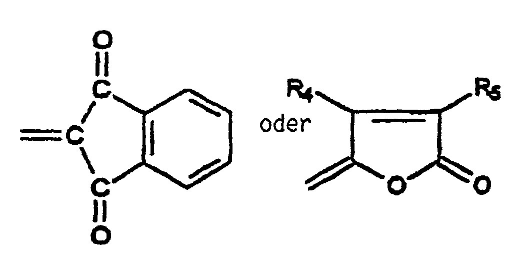 worin R₄ ein Alkyl, Aryl oder Cycloalkyl ist und R₅ CN, COOH, CO₂-Alkyl, Carbamyl oder N-Alkylcarbamyl ist, worin jede Alkyl-, Aryl- oder Cycloalkyleinheit oder ein Teil einer Gruppe oder eines Rests substituiert sein kann mit einer oder mehreren auxochromen Gruppen, die aus der Gruppe ausgewählt sind, die besteht aus -Cl, -Br, -F, -OH, Alkyl, Alkoxy, Alkylamino, Dialkylamino, -NH₂, -NO₂, Phenyl, Carbamoyl, - CN, Carbalkoxy, Sulfonyl, Sulfamyl und Sulfamido.

23. Zusammensetzung für eine radierbare Tinte nach Anspruch 17, wobei der Polyurethan-Harnstoff linear ist und n von 1 bis 5 beträgt.

24. Zusammensetzung für eine radierbare Tinte nach Anspruch 17, wobei der Polyurethan-Harnstoff auf Wasserbasis nach dem Lösemittelverfahren erhalten wird, das umfaßt:
(a) Umsetzen eines Farbstoffmonomers, das strukturelle Einheiten der allgemeinen Formel aufweist: 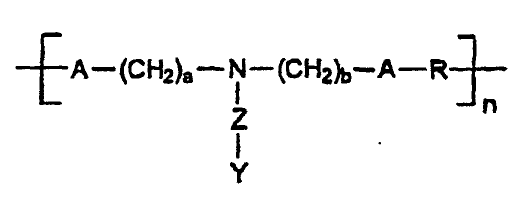 worin jedes A unabhängig voneinander eine Ester- oder Amid-Bindung sein kann, n eine ganze Zahl von 1 bis 50 sein kann, R ein aliphatischer oder aromatischer Kohlenwasserstoff mit bis zu 30 Kohlenstoffatomen ist, a und b unabhängig voneinander von 1 bis 10 betragen, Z eine unsubstituierte Arylen-Gruppe, oder eine Arylen-Gruppe ist, die mit einem oder mehreren Substituenten substituiert ist, die aus der Gruppe ausgewählt sind, die besteht aus Halogen, Hydroxyl, -CHO, Alkyl, Alkoxy, Alkylamino, Dialkylamino, Amid, Alkylamid, - NH₂, -NO₂, Phenyl, Carbamyl, -CN, Carbalkoxy, Sulfonyl, Sulfamyl und Sulfamido, oder eine Einfachbindung ist, wenn Y eine Anthrachinon-Gruppe ist, und Y eine Farbstoffeinheit ist, die ausgewählt ist aus der Gruppe, die besteht aus einer Azo-, Tricyanovinyl-, Anthrachinon- und Methin-Gruppe, mit einem Diisocyanat, um ein mit Isocyanat-Gruppen terminiertes Präpolymer zu bilden, das hydrophile Gruppen, die das Präpolymer selbstdispergierbar machen, aufweist oder nicht aufweist;
(b) Umsetzen des mit Isocyanatgruppen terminierten Präpolymers, gelöst in einem organischen Lösemittel, mit einem Kettenverlängerer in Form eines aliphatischen Diamins und, wenn dem Präpolymeren ausreichend hydrophile Gruppen fehlen, um selbstdispergierbar zu sein, einem Kettenverlängerer in Form eines aliphatischen Diamins, das wenigstens eine hydrophile Gruppe besitzt, um eine Lösung in einem organischen Lösungsmittel eines selbstdispergierenden Polyurethan-Harnstoffs zu bilden; und
(c) Zugeben einer ausreichenden Menge Wasser zu der Lösung des Polyurethan-Harnstoffs in dem organischen Lösemittel, um eine Dispersion von Polyurethan-Harnstoff-Teilchen zu bilden.

25. Zusammensetzung für eine radierbare Tinte nach Anspruch 17, wobei der Polyurethan-Harnstoff auf Wasserbasis durch Schmelzdispergier-Verfahren erhalten wird, das umfaßt:
(a) Umsetzen eines Farbstoffmonomers, das strukturelle Einheiten der allgemeinen Formel aufweist: 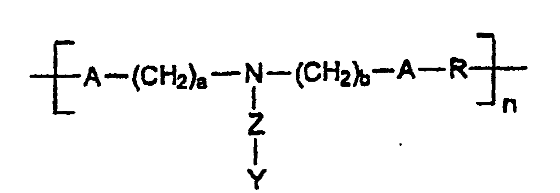 worin jedes A unabhängig voneinander eine Ester- oder Amidbindung sein kann, n eine ganze Zahl von 1 bis 50 sein kann, R ein aliphatischer oder aromatischer Kohlenwasserstoff mit bis zu 30 Kohlenstoffatomen ist, a und b unabhängig voneinander von 1 bis 10 betragen, Z eine unsubstituierte Arylengruppe oder eine Arylengruppe ist, die mit einem oder mehreren Substituenten substituiert ist, die aus der Gruppe ausgewählt sind, die besteht aus Halogen, Hydroxyl, -CHO, Alkyl, Alkoxy, Alkylamino, Dialkylamino, Amid, Alkylamid, -NH₂, -NO₂, Phenyl, Carbamyl, -CN, Carbalkoxy, Sulfonyl, Sulfamyl und Sulfamido, oder eine Einfachbindung ist, wenn Y eine Anthrachinon-Gruppe ist, und Y eine Farbstoffeinheit ist, die ausgewählt ist aus der Gruppe, die besteht aus einer Azo-, Tricyanovinyl-, Anthrachinon- und Methin-Gruppe, mit einem aliphatischen Diol, das wenigstens eine ionische Gruppe aufweist, und einem Diisocyanat, um wenigstens ein mit Isocyanat-Gruppen terminiertes Präpolymer zu bilden, das ionische Gruppen besitzt;
(b) Umsetzen des mit Isocyanatgruppen terminierten Präpolymers mit einem mit Formaldehyd reaktiven Verkappungsmittel, um die Isocyanatendgruppen zu verkappen;
(c) Dispergieren des verkappten Präpolymers in Wasser; und
(d) Umsetzen des dispergierten verkappten Präpolymers mit Formaldehyd, um dispergierte Polyurethan-Harnstoff-Teilchen zu bilden.

26. Zusammensetzung für eine radierbare Tinte nach Anspruch 17, bei dem der Polyurethan-Harnstoff auf Wasserbasis nach dem Präpolymer-Mischverfahren erhalten wird, das umfaßt;
(a) Umsetzen eines Farbstoffmonomers, das Struktur-Einheiten der allgemeinen Formel aufweist: 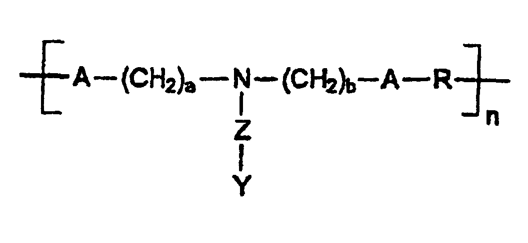 worin jedes A unabhängig voneinander eine Ester- oder Amidbindung sein kann, n eine ganze Zahl von 1 bis 50 sein kann, R ein aliphatischer oder aromatischer Kohlenwasserstoff mit bis zu 30 Kohlenstoffatomen ist, a und b unabhängig voneinander von 1 bis 10 betragen, Z eine unsubstituierte Arylengruppe oder eine Arylengruppe ist, die mit einem oder mehreren Substituenten substituiert ist, die aus der Gruppe ausgewählt sind, die besteht aus Halogen, Hydroxyl, -CHO, Alkyl, Alkoxy, Alkylamino, Dialkylamino, Amid, Alkylamid, - NH₂, -NO₂, Phenyl, Carbamyl, -CN, Carbalkoxy, Sulfonyl, Sulfamyl und Sulfamido, oder eine Einfachbindung ist, wenn Y eine Anthrachinon-Gruppe ist, und Y eine Farbstoffeinheit ist, die ausgewählt ist aus der Gruppe, die besteht aus einer Azo-, Tricyanovinyl-, Anthrachinon- und Methin-Gruppe, mit einem Carboxylgruppen enthalten Diol und einem aliphatischen Diisocyanat, um ein mit Isocyanatgruppen terminiertes Präpolymer zu bilden, das freie Carboxylgruppen besitzt;
(b) Umsetzen des Präpolymers mit einem tertiären Amin, um die Carboxyl-Gruppen in Ammoniumcarboxylat-Gruppen zu überführen und das Präpolymer selbstdispergierbar zu machen;
(c) Dispergieren des selbstdispergierenden Präpolymers in Wasser; und
(d) Umsetzen des dispergierten Präpolymers mit einem Diamin-Kettenverlängerer, um eine wäßrige Dispersion von Polyurethan-Harnstoff-Teilchen zu bilden.

27. Zusammensetzung für eine radierbare Tinte nach Anspruch 17, wobei der Polyurethan-Harnstoff auf Wasserbasis nach dem Ketamin/Ketazin-Verfahren erhalten wird, das umfaßt:
(a) Umsetzen eines Farbstoffmonomers, das Struktur-Einheiten der allgemeinen Formel aufweist: 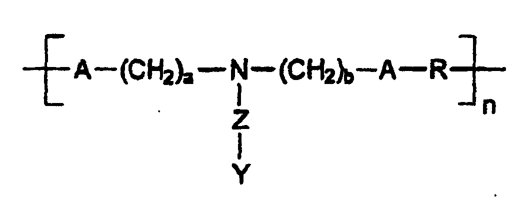 worin jedes A unabhängig voneinander eine Ester- oder Amid-Bindung sein kann, n eine ganze Zahl von 1 bis 50 sein kann, R ein aliphatischer oder aromatischer Kohlenwasserstoff mit 30 Kohlenstoffatomen ist, a und b unabhängig voneinander von 1 bis 10 betragen, Z eine unsubstituierte Arylen-Gruppe oder eine Arylen-Gruppe ist, die mit einem oder mehreren Substituenten substituiert ist, die aus der Gruppe ausgewählt sind, die besteht aus Halogen, Hydroxyl, -CHO, Alkyl, Alkoxy, Alkylamino, Dialkylamino, Amid, Alkylamid, -NH₂, -NO₂, Phenyl, Carbamyl, -CN, Carbalkoxy, Sulfonyl, Sulfamyl und Sulfamido, oder eine Einfachbindung ist, wenn Y eine Anthrachinon-Gruppe ist, und Y eine Farbstoff-Einheit ist, die aus der Gruppe ausgewählt ist, die besteht aus einer Azo-, Tricyanovinyl-, Anthrachinon- und einer Methin-Gruppe, mit einem Carboxyl-Gruppen enthaltenden Diol und einem aliphatischen Diisocyanat, um ein mit Isocyanat-Gruppen terminiertes Präpolymer zu bilden, das freie Carboxyl-Gruppen besitzt;
(b) Umsetzen des Präpolymers mit einem tertiären Amin, um die Carboxyl-Gruppen in Ammoniumcarboxylat-Gruppen zu überführen und das Präpolymer selbstdispergierbar zu machen; und
(c) Umsetzen des selbstdispergierenden Präpolymers mit wenigstens einem Glied der Gruppe, die besteht aus Ketimin und Ketazin, in Gegenwart von Wasser, um eine wäßrige Dispersion von Polyurethan-Harnstoff-Teilchen zu bilden.

28. Zusammensetzung für eine radierbare Tinte nach Anspruch 1, wobei die Zusammensetzung außerdem wenigstens einen zusätzlichen Bestandteil aufweist, der aus der Gruppe ausgewählt ist, die besteht aus natürlichen Latices, synthetischen Latices, Rheologie-Modifikatoren, Suspendiermitteln, Feuchthaltemitteln, Emulgatoren, Tensiden, Weichmachern, Spreitemitteln, Freigabemitteln, Trennmitteln, antimikröbiellen Mitteln, Antikorrosionsmitteln, Antioxidantien und Koaleszierhilfen.

29. Zusammensetzung für eine radierbare Tinte nach Anspruch 1, wobei die Zusammensetzung eine Viskosität von 2 bis 80.000 cP aufweist.

30. Zusammensetzung für eine radierbare Tinte nach Anspruch 1, wobei die Zusammensetzung eine Viskosität von 3 bis 30.000 cP aufweist.

31. Zusammensetzung für eine radierbare Tinte nach Anspruch 1, wobei wenigstens eines der Monomeren der allgemeinen Formel entspricht
(R) ₐ (P [X] _{b}) c,
worin R eine Farbstoff-Einheit ist, die kovalent an den Polymer-Rest P gebunden ist, X eine funktionelle Gruppe ist, a, b und c jeweils wenigstens 1 betragen mit der Maßgabe, daß das Produkt von b x c wenigstens 2 beträgt, wenn c wenigstens 2 ist, a 1 ist und wenn es mehr als ein R, P oder X gibt, jedes R, R oder X gleich oder unterschiedlich sein kann.

32. Markierungsinstrument, das eine Zusammensetzung für eine radierbare Tinte nach irgendeinem der Ansprüche 1 bis 31 enthält.

33. Markierungsinstrument nach Anspruch 32, das ein Kugelspitzen-Schreibgerät ist.

34. Polyurethan-Harnstoff auf Wasserbasis, der dadurch erhalten wurde, daß man die Polymerisation eines einen Polyurethan-Harnstoff auf Wasserbasis bildenden Reaktionsmediums bewirkt, das wenigstens zwei miteinander reaktive polyfunktionelle Monomere enthält, wobei wenigstens eines der Monomeren Struktur-Einheiten der Formel aufweist: 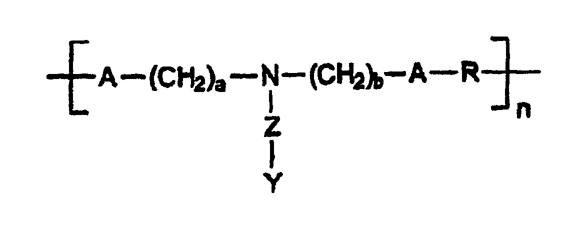 worin jedes A unabhängig eine Ester- oder Amid-Bindung sein kann, n eine ganze Zahl von 1 bis 50 sein kann, R ein aliphatischer oder aromatischer Kohlenwasserstoff mit bis zu 30 Kohlenstoffatomen ist, a und b unabhängig voneinander von 1 bis 10 betragen, Z eine substituierte oder unsubstituierte Arylen-Gruppe oder eine Einfachbindung ist, wenn Y eine Anthrachinon-Gruppe ist, und Y eine Farbstoff-Einheit ist, die aus der Gruppe ausgewählt ist, die besteht aus einer Azo-, Tricyanovinyl-, Anthrachinon- und Methin-Gruppe.

35. Polymer, das Struktur-Einheiten der allgemeinen Formel enthält: 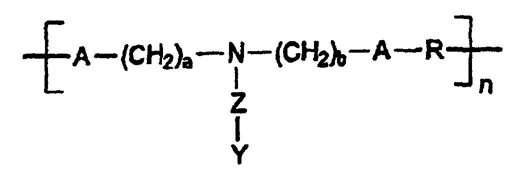 worin jedes A unabhängig eine Ester- oder Amid-Bindung sein kann, n eine ganze Zahl von 1 bis 50 sein kann, R ein aliphatischer oder aromatischer Kohlenwasserstoff mit bis zu 30 Kohlenstoffatomen ist, a und b unabhängig voneinander von 1 bis 10 betragen, Z eine substituierte oder unsubstituierte Arylen-Gruppe oder eine Einfach-Bindung ist, wenn Y eine Anthrachinon-Gruppe ist, und Y eine Farbstoff-Einheit ist, die aus der Gruppe ausgewählt ist, die besteht aus einer Azo-, Tricyanovinyl-, Anthrachinon- und Methin-Gruppe.

36. Polymer nach Anspruch 35, worin Z eine substituierte Arylen-Gruppe ist, die mit einem oder mehreren Substituenten substituiert ist, die ausgewählt sind aus der Gruppe, die besteht aus Halogen, Hydroxyl, -CHO, Alkyl, Alkoxy, Alkylamino, Dialkylamino, Amid, Alkylamid, -NH₂, -NO₂, Phenyl, Carbamyl, -CN, Carbalkoxy, Sulfonyl, Sulfamyl und Sulfamino.

37. Polyurethan-Harnstoff auf Wasserbasis nach Anspruch 34, worin Z eine substituierte Arylen-Gruppe ist, die mit einem oder mehreren Substituenten substituiert ist, die ausgewählt sind aus der Gruppe, die besteht aus Halogen, Hydroxyl, - CHO, Alkyl, Alkoxy, Alkylamino, Dialkylamino, Amid, Alkylamid, -NH₂, -NO₂, Phenyl, Carbamyl, -CN, Carbalkoxy, Sulfonyl, Sulfamyl und Sulfamino.

## Revendications

1. Composition d'encre effaçable qui comprend (a) un polyuréthanne-urée en suspension dans l'eau possédant un nombre suffisant de groupes ioniques dans sa structure pour être hydrodispersable, obtenu en effectuant une polymérisation d'un milieu réactionnel formant le polyuréthanne-urée en suspension dans l'eau contenant au moins deux monomères polyfonctionnels co-réactifs, dans laquelle au moins l'un des monomères possède un groupe fonctionnel colorant qui lui est lié par liaison covalente et (b) un support liquide évaporable dans lequel le colorant polymère est dissous, dispersé ou gonflé ; la composition d'encre effaçable lorsqu'elle est appliquée sur un substrat poreux tel que le papier cellulosique et après séchage sur celui-ci présentant moins de 30 pour cent en poids d'écailles par rapport au poids de l'encre séchée et une valeur delta de résistance à l'effaçure E*ab de moins de 4,0.

2. Composition d'encre effaçable selon la revendication 1 présentant moins de 20 pour cent en poids d'écailles sur la base du poids de l'encre séchée et une valeur delta de résistance à l'effaçure E*ab de moins de 3,5.

3. Composition d'encre effaçable selon la revendication 1 présentant moins de 10 pour cent en poids d'écailles sur la base du poids de l'encre séchée et une valeur delta de résistance à l'effaçure E*ab de moins de 3,0.

4. Composition d'encre effaçable selon la revendication 1, dans laquelle le polyuréthanne-urée en suspension dans l'eau est obtenu par le procédé au solvant, le procédé par dispersion à l'état fondu, le procédé par mélange de prépolymères ou le procédé à la kétamine / kétazine.

5. Composition d'encre effaçable selon la revendication 1, dans laquelle le polyuréthanne-urée en suspension dans l'eau est obtenu par le procédé au solvant qui comprend :
(a) la réaction d'un polyol polymérisé avec un diisocyanate pour donner un prépolymère terminé par un groupe isocyanate possédant ou étant dépourvu de suffisamment de groupes hydrophiles pour rendre le prépolymère auto-dispersible ;
(b) la réaction du prépolymère terminé par un groupe isocyanate dissous dans un solvant organique avec un extenseur de chaîne diamine aliphatique et, quand le prépolymère ne possède pas suffisamment de groupes hydrophiles pour être auto-dispersible, un extenseur de chaîne diamine aliphatique possédant au moins un groupe hydrophile, pour donner une solution de solvant organique de polyuréthanne-urée auto-dispersible ; et
(c) l'addition d'une quantité d'eau suffisante à la solution de solvant organique du polyuréthanne-urée pour former une dispersion de particules de polyuréthanne-urée ;
au moins l'un desdits polyol polymérisé, diisocyanate et diamine aliphatique possédant un groupe fonctionnel colorant qui lui est lié par liaison covalente.

6. Composition d'encre effaçable selon la revendication 5, dans laquelle le polyol polymérisé est un diol polymérisé selon la formule générale R(P-OH)₂ dans laquelle R est un groupe fonctionnel colorant lié par liaison covalente au résidu de polymère P et chaque P est le même ou différent.

7. Composition d'encre effaçable selon la revendication 6, dans laquelle le résidu de polymère P est celui d'un polyéther, polyester ou polycarbonate.

8. Composition d'encre effaçable selon la revendication 1, dans laquelle le polyuréthanne-urée en suspension dans l'eau est obtenu par le procédé par dispersion à l'état fondu qui comprend :
(a) la réaction d'un polyol polymérisé, d'un diol aliphatique possédant au moins un groupe ionique et un diisocyanate pour donner un prépolymère terminé par un groupe isocyanate possédant des groupes ioniques ;
(b) la réaction du prépolymère terminé par un groupe isocyanate avec un agent d'encapsulation réactif au formaldéhyde pour encapsuler les groupes terminaux isocyanate ;
(c) la dispersion du prépolymère encapsulé dans l'eau ; et,
(d) la réaction du prépolymère encapsulé dispersé avec le formaldéhyde pour donner des particules de polyuréthanne-urée dispersées,
au moins l'un desdits polyol polymérisé, diisocyanate et diamine aliphatique possédant un groupe fonctionnel colorant qui lui est lié par liaison covalente.

9. Composition d'encre effaçable selon la revendication 8, dans laquelle le polyol polymérisé est un diol polymérisé selon la formule générale R(P-OH)₂ dans laquelle R est un groupe fonctionnel colorant lié par liaison covalente au résidu de polymère P et chaque P est le même ou différent.

10. Composition d'encre effaçable selon la revendication 9, dans laquelle le résidu de polymère P est celui d'un polyéther, polyester ou polycarbonate.

11. Composition d'encre effaçable selon la revendication 1, dans laquelle le polyuréthanne-urée en suspension dans l'eau est obtenu par le procédé par mélange du prépolymère qui comprend :
(a) la réaction d'un polyol polymérisé, d'un diol contenant un groupe carboxylique et d'un diisocyanate aliphatique pour donner un prépolymère terminé par un groupe isocyanate possédant des groupes carboxyle libres ;
(b) la réaction du prépolymère avec une amine tertiaire pour convertir les groupes carboxyle en groupes carboxylate d'ammonium et rendre le prépolymère auto-dispersible ;
(c) la dispersion du prépolymère auto-dispersible dans de l'eau ; et,
(d) la réaction du prépolymère dispersé avec un extenseur de chaîne diamine pour donner une dispersion aqueuse de particules de polyuréthanne-urée,
au moins l'un desdits polyol polymérisé, diol contenant un groupe carboxyle, diisocyanate aliphatique et matière de charge à chaîne diamine liquide aliphatique possédant un groupe fonctionnel colorant qui lui est lié par liaison covalente.

12. Composition d'encre effaçable selon la revendication 11, dans laquelle le polyol polymérisé est un diol polymérisé selon la formule générale R(P-OH)₂ dans laquelle R est un groupe fonctionnel colorant lié par liaison covalente au résidu de polymère P et chaque P est le même ou différent.

13. Composition d'encre effaçable selon la revendication 12, dans laquelle le résidu de polymère P est celui d'un polyéther, polyester ou polycarbonate.

14. Composition d'encre effaçable selon la revendication 1, dans laquelle le polyuréthanne-urée en suspension dans l'eau est obtenu par le procédé à la kétamine / kétazine qui comprend :
(a) la réaction d'un polyol polymérisé, d'un diol contenant un groupe carboxylique et d'un diisocyanate pour donner un prépolymère terminé par un groupe isocyanate possédant des groupes carboxyle libres ;
(b) la réaction du prépolymère avec une amine tertiaire pour convertir les groupes carboxyle en groupes carboxylate d'ammonium et rendre le prépolymère auto-dispersible ;
(c) la réaction du prépolymère auto-dispersible avec au moins un membre appartenant au groupe constitué par la kétamine et la kétazine en présence d'eau pour donner une dispersion aqueuse de particules de polyuréthanne-urée,
au moins l'un desdits polyol polymérisé, diol contenant un groupe carboxyle, diisocyanate aliphatique et extenseur de chaîne diamine liquide aliphatique possédant un groupe fonctionnel colorant qui lui est lié par liaison covalente.

15. Composition d'encre effaçable selon la revendication 14, dans laquelle le polyol polymérisé est un diol polymérisé selon la formule générale R(P-OH)₂ dans laquelle R est un groupe fonctionnel colorant lié par liaison covalente au résidu de polymère P et chaque P est le même ou différent.

16. , Composition d'encre effaçable selon la revendication 15, dans laquelle le résidu de polymère P est celui d'un polyéther, polyester ou polycarbonate.

17. Composition d'encre effaçable selon la revendication 1, dans laquelle au moins l'un des monomères comprend des unités structurales selon la formule générale : 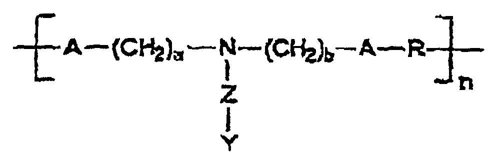 dans laquelle chaque A peut être indépendamment une liaison ester ou amide, Ω peut être un nombre entier compris entre environ 1 et 50, R est un hydrocarbure aliphatique ou aromatique comprenant jusqu'à 30 atomes de carbone, a et b sont indépendamment compris entre 1 et 10, Z est un groupe arylène substitué ou non-substitué ou une liaison simple quand Y est un groupe anthraquinone et Y est un groupe fonctionnel colorant choisi dans le groupe constitué par les groupes azo, tricyanovinyle, anthraquinone et méthine.

18. Composition d'encre effaçable selon la revendication 17, danslaquelle Z est un groupe arylène substitué qui est substitué par un ou plusieurs substituants choisis dans le groupe constitué par les suivants : halogéno, hydroxyle, -CHO, alkyle, alcoxy, alkylamino, dialkylamino, amide, akylamide, -NH₂, -NO₂, phényle, carbamyle, -CN, carbalcoxy, sulfonyle, sulfamyle et sulfamino.

19. Composition d'encre effaçable selon la revendication 17, dans laquelle Y est un groupe azo selon la formule -N = N-D ou -N = N-G-N = N-D, dans laquelle D est un noyau aromatique de 1 à 5 cycles (condensés ou reliés par des liaisons simples) ou un cycle hétérocyclique de 4, 5 ou 6 membres contenant de un à quatre ou davantage d'atomes de -N-, de -S- et d'atomes non-peroxydes -O- et portant éventuellement un ou plusieurs groupes auxochromes choisis dans le groupe constitué par les suivants : -Cl. -Br, -F, -OH, alkyle, alcoxy, alkytamino, dialkylamino, -NH₂, -NO₂, phényle, carbamoyle, -CN, carbalcoxy, sulfonyle, sulfamyle et sulfamido et G est un groupe phénylène ou naphthylène.

20. Composition d'encre effaçable selon la revendication 17, dans laquelle Y est un groupe tricyanovinyle selon la formule :

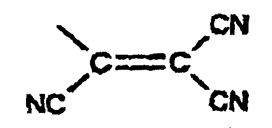

21. Composition d'encre effaçable selon la revendication 17, dans laquelle Y est un groupe anthraquinone monovalent selon la formule : 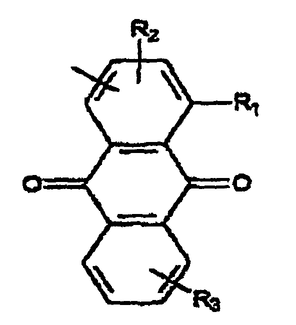 dans laquelle R_{1,} R₂ et R₃ peuvent chacun être indépendamment -OH, -NH₂, alkylamino, dialkylamino ou arylamino quand aryle est phényle ou phényle substitué par des groupes auxochromes choisis dans le groupe constitué par les suivants : -Cl,-Br, -F, -OH, alkyle, alcoxy, alkylamino, dialkylamino, -NH₂, -NO₂, phényle, carbamoyle, -CN, carbalcoxy, sulfonyle, sulfamyle et sulfamido et G est un groupe phénylène ou naphthylène.

22. Composition d'encre effaçable selon la revendication 17, dans laquelle Y est un groupe méthine selon la formule : 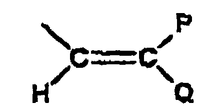 dans laquelle P et Q sont indépendamment choisis parmi les suivants : cyano, carbalcoxy, carbaryloxy, carbaralkyloxy, carbamyle, carboxy, N-alkylcarbamyle, N-alkyl-N-arylcarbamyle, N,N-diakylcarbamyle, N-arylcarbamyle, N-cyclohexylcarbamyle, aryle, 2-benzoxazolyle, 2-benzothiazlyle, 2-benzimidazolyle, 1,3,4-thiadiazol-2-yl, 1,3,4-oxadiazol-2-yl, SO₂ alkyle, SO₂ aryle et acyle ou P et Q dans =CPQ peuvent être combinés en : 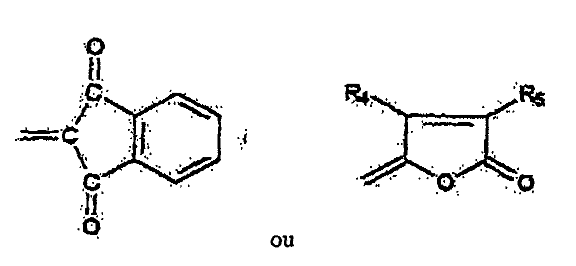 dans laquelle R₄ est alkyle, aryle ou cycloalkyle et R₅ est CN, COOH, CO₂ alkyle, carbamyle ou N-alkylcarbamyle, dans laquelle chaque groupe fonctionnel alkyle, aryle ou cycloalkyle ou chaque segment d'un groupe ou radical peut être substitué par un ou plusieurs groupes auxochromes choisis dans le groupe constitué par les suivants : -Cl, -Br, -F, -OH, alkyle, alcoxy, alkylamino, dialkylamino, -NH₂,-NO₂, phényle, carbamoyle, -CN, carbalcoxy, sulfonyle, sulfamyle et sulfamido.

23. Composition d'encre effaçable selon la revendication 17, dans laquelle le polyuréthanne-urée est linéaire et n est de 1 et 5.

24. Composition d'encre effaçable selon la revendication 17, dans laquelle le polyuréthanne-urée en suspension dans l'eau est obtenu par le procédé au solvant qui comprend :
(a) la réaction d'un monomère colorant qui comprend les unités structurales selon la formule générale : 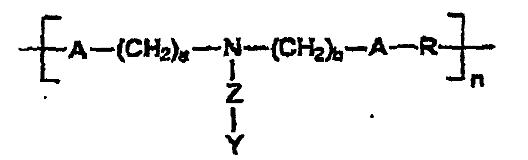 dans laquelle chaque A peut être indépendamment une liaison ester ou amide, n peut être un nombre entier compris entre 1 et 50, R est un hydrocarbure aliphatique ou aromatique comprenant jusqu'à 30 atomes de carbone, a et b sont indépendamment compris entre 1 et 10, Z est un groupe arylène non-substitué, un groupe arylène substitué par un ou plusieurs substituants choisis dans le groupe constitué par les suivants : halogéno, hydroxyle, -CHO, alkyle, alcoxy, alkylamino, dialkylamino, amide, akylamide, -NH₂, -NO₂, phényle, carbamyle, -CN, carbalcoxy, sulfonyle, sulfamyle et sulfamido ou une liaison simple quand Y est un groupe anthraquinone et Y est un groupe fonctionnel colorant choisi dans le groupe constitué par les groupes azo, tricyanovinyle, anthraquinone et méthine, avec un diisocyanate pour donner un prépolymère terminé par un groupe isocyanate possédant ou étant dépourvu de suffisamment de groupes hydrophiles pour rendre le prépolymère auto-dispersible ;
(b) la réaction du prépolymère terminé par un groupe isocyanate dissous dans un solvant organique avec un extenseur de chaîne diamine aliphatique et, quand le prépolymère ne possède pas suffisamment de groupes hydrophiles pour être auto-dispersible, un extenseur de chaîne diamine aliphatique possédant au moins un groupe hydrophile pour donner une solution de solvant organique de polyuréthanne-urée auto-dipersible ; et
(c) l'addition d'une quantité d'eau suffisante à la solution de solvant organique du polyuréthanne-urée pour former une dispersion de particules de polyuréthanne-urée.

25. Composition d'encre effaçable selon la revendication 17, dans laquelle le polyuréthanne-urée en suspension dans l'eau est obtenu par le procédé par dispersion à l'état fondu qui comprend :
(a) la réaction d'un monomère colorant qui comprend les unités structurales selon la formule générale : 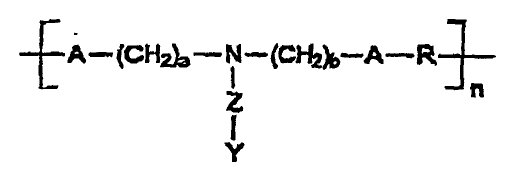 dans laquelle chaque A peut être indépendamment une liaison ester ou amide, n peut être un nombre entier compris entre 1 et 50, R est un hydrocarbure aliphatique ou aromatique comprenant jusqu'à 30 atomes de carbone, a et b sont indépendamment compris entre 1 et 10, Z est un groupe arylène non-substitué qui est substitué par un ou plusieurs substituants choisis dans le groupe constitué par les suivants : halogéno, hydroxyle, -CHO, alkyle, alcoxy, alkylamino, dialkylamino, amide, akylamide, -NH₂, -NO₂, phényle, carbamyle, -CN, carbalcoxy, sulfonyle, sulfamyte et sulfamido ou une liaison simple quand Y est un groupe anthraquinone et Y est un groupe fonctionnel colorant choisi dans le groupe constitué par les groupes azo, tricyanovinyle, anthraquinone et méthine, un diol aliphatique possédant au moins un groupe ionique, et d'un diisocyanate pour donner un prépolymère terminé par un groupe isocyanate possédant des groupes ioniques ;
(b) la réaction du prépolymère terminé par un groupe isocyanate avec un agent d'encapsulation réactif au formaldéhyde pour encapsuler les groupes terminaux isocyanate ;
(c) la dispersion du prépolymère encapsulé dans l'eau ; et,
(d) la réaction du prépolymère encapsulé dispersé avec le formaldéhyde pour donner des particules de polyuréthanne-urée dispersées.

26. Composition d'encre effaçable selon la revendication 17, dans laquelle le polyuréthanne-urée en suspension dans l'eau est obtenu par le procédé par mélange du prépolymère qui comprend :
(a) la réaction d'un monomère colorant qui comprend les unités structurales selon la formule générale : 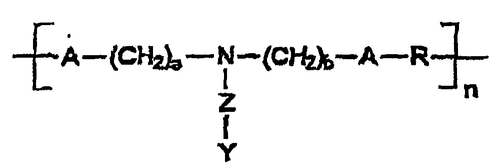 dans laquelle chaque A peut être indépendamment une liaison ester ou amide, n peut être un nombre entier compris entre environ 1 et environ 50, R est un hydrocarbure aliphatique ou aromatique comprenant jusqu'à 30 atomes de carbone, a et b sont indépendamment compris entre 1 et environ 10, Z est un groupe arylène non-substitué, un groupe arylène qui est substitué par un ou plusieurs substituants choisis dans le groupe constitué par les suivants : halogéno, hydroxyle, -CHO, alkyle, alcoxy, alkylamino, dialkylamino, amide, akylamide, -NH₂, NO₂, phényle, carbamyle, -CN, carbalcoxy, sulfonyle, sulfamyle et sulfamido ou une liaison simple quand Y est un groupe anthraquinone et Y est un groupe fonctionnel colorant choisi dans le groupe constitué par les groupes azo, tricyanovinyle, anthraquinone et méthine, un diol contenant un groupe carboxylique, et d'un diisocyanate aliphatique pour donner un prépolymère terminé par un groupe isocyanate possédant des groupes carboxyle libres ;
(b) la réaction du prépolymère avec une amine tertiaire pour convertir les groupes carboxyle en groupes carboxylate d'ammonium et rendre le prépolymère auto-dispersible ;
(c) la dispersion du prépolymère auto-dispersible dans de l'eau ; et
(d) la réaction du prépolymère dispersé avec un extenseur de chaîne diamine pour donner une dispersion aqueuse de particules de polyuréthanne-urée.

27. Composition d'encre effaçable selon la revendication 17, dans laquelle le polyuréthanne-urée en suspension dans l'eau est obtenu parle procédé à la kétamine /kétazine qui comprend :
(a) la réaction d'un monomère colorant qui comprend les unités structurales selon la formule générale : 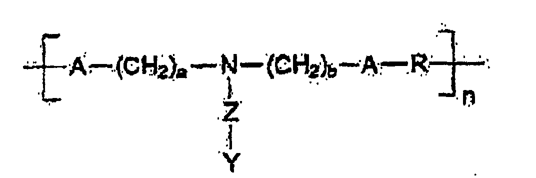 dans laquelle chaque A peut être indépendamment une liaison ester ou amide, n peut être un nombre entier compris entre 1 et 50, R est un hydrocarbure aliphatique ou aromatique comprenant jusqu'à 30 atomes de carbone, a et b sont indépendamment compris entre 1 et 10, Z est un groupe arylène non-substitué, un groupe arylène qui est substitué par un ou plusieurs substituants choisis dans le groupe constitué par les suivants : halogéno, hydroxyle, -CHO, alkyle, alcoxy, alkylamino, dialkylamino, amide, akylamide, -NH₂, -NO₂, phényle, carbamyle, -CN, carbalcoxy, sulfonyle, sulfamyle et sulfamido ou une liaison simple quand Y est un groupe anthraquinone et Y est un groupe fonctionnel colorant choisi dans le groupe constitué par les groupes azo, tricyanovinyle, anthraquinone et méthine, un diol contenant un groupe carboxylique, et d'un diisocyanate aliphatique pour donner un prépolymère terminé par un groupe isocyanate possédant des groupes carboxyle libres ;
(b) la réaction du prépolymère avec une amine tertiaire pour convertir les groupes carboxyle en groupes carboxylate d'ammonium et rendre le prépolymère auto-dispersible ; et
(d) la réaction du prépolymère auto-dispersible avec au moins un membre appartenant au groupe constitué par la kétamine et la kétazine en présence d'eau pour donner une dispersion aqueuse de particules de polyuréthanne-urée.

28. Composition d'encre effaçable selon la revendication 1, dans laquelle la composition comprend en outre au moins un composant supplémentaire choisi dans le groupe constitué par les structures cristallines naturelles, les structures cristallines synthétiques, les modificateurs rhéologiques, les agents de suspension, les humectants, les émulsifiants, les agents de surface, les plastifiants, les agents d'étalement, les agents de séchage, les agents de décollage, les agents de séparation, les conservateurs, les agents antimicrobiens, les agents anticorrosion, les antioxydants et les agents de coalescence.

29. Composition d'encre effaçable selon la revendication 1, dans laquelle la composition possède une viscosité comprise entre 2 et 80 000 centipoises.

30. Composition d'encre effaçable selon la revendication 1, dans laquelle la composition possède une viscosité comprise entre 3 et 30 000 centipoises.

31. Composition d'encre effaçable selon la revendication 1, dans laquelle au moins l'un des monomères correspond à la formule générale :
(R)ₐ(P[x]_{b})_{c}
dans laquelle R est un groupe fonctionnel colorant lié par liaison covalente au résidu de polymère P, X est un groupe fonctionnel, a, b et c sont chacun au moins 1, du moment que, le produit de b x c est d'au moins 2, quand c est au moins 2, a est 1 et quand il existe plusieurs R, P ou X, chaque R, P ou X peut être le même ou différent.

32. Poinçon contenant la composition d'encre effaçable selon l'une quelconque des revendications 1 à 31.

33. Poinçon selon la revendication 32 qui est un crayon bille.

34. Polyuréthanne-urée en suspension dans l'eau obtenu en effectuant une polymérisation d'un milieu réactionnel formant le polyuréthanne-urée en suspension dans l'eau contenant au moins deux monomères polyfonctionnels co-réactifs, dans laquelle au moins l'un des monomères contient les unités structurales selon la formule : 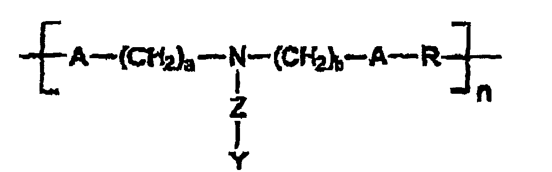 dans laquelle chaque A peut être indépendamment une liaison ester ou amide, n peut être un nombre entier compris entre environ 1 et environ 50, R est un hydrocarbure aliphatique ou aromatique comprenant jusqu'à 30 atomes de carbone, a et b sont indépendamment compris entre 1. et environ 10, Z est un groupe arylène substitué ou non-substitué ou une liaison simple quand Y est un groupe anthraquinone et Y est un groupe fonctionnel colorant choisi dans le groupe constitué par les groupes azo, tricyanovinyle, anthraquinone et méthine.

35. Polymère contenant les unités structurales selon la formule générale : 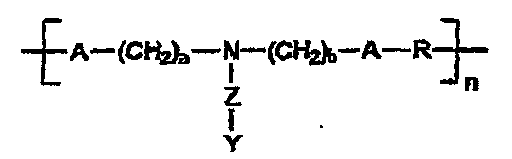 dans laquelle chaque A peut être indépendamment une liaison ester ou amide, n peut être un nombre entier compris entre 1 et 50, R est un hydrocarbure aliphatique ou aromatique comprenant jusqu'à 30 atomes de carbone, a et b sont indépendamment compris entre 1 et 10, Z est un groupe arylène substitué ou non-substitué ou une liaison simple quand Y est un groupe anthraquinone et Y est un groupe fonctionnel colorant choisi dans le groupe constitué par les groupes azo, tricyanovinyle, anthraquinone et méthine.

36. Polymère selon la revendication 36, dans laquelle Z est un groupe arylène substitué qui est substitué par un ou plusieurs substituants choisis dans le groupe constitué par les suivants : halogéno, hydroxyle, -CHO, alkyle, alcoxy, alkylamino, dialkylamino, amide, akylamide, -NH₂, -NO₂, phényle, carbamyle, -CN, carbalcoxy, sulfonyle, sulfamyle et sulfamino.

37. Polyuréthanne-urée en suspension dans l'eau selon la revendication 34, dans laquelle Z est un groupe arylène substitué qui est substitué par un ou plusieurs substituants choisis dans le groupe constitué par les suivants : halogéno, hydroxyle,-CHO, alkyle, alcoxy, alkylamino, dialkylamino, amide, akylamide, -NH₂, -NO₂, phényle, carbamyle, -CN, carbalcoxy, sulfonyle, sulfamyle et sulfamino.
